# EUROPEAN PATENT APPLICATION

(11) **EP 4 711 041 A1**
(43) Date of publication of application: **18.03.2026**
(21) Application number: 24803511.5
(22) Date of filing: 08.05.2024
(51) Int. Cl.: B01L 3/02, F04B 43/04, G01N 1/00

(54) **PIPETTE DEVICE, PIPETTE SYSTEM, AND PUMP COMPONENT**

(30) Priority: 09.05.2023 JP 2023077525
(71) Applicant: Live Cell Diagnosis, Ltd., Asakashi, Saitama 351-0022 (JP); Kyushu University, National University Corporation, Nishi-ku Fukuoka-shi Fukuoka 819-0395 (JP)
(72) Inventor: SAKUMA Shinya, Fukuoka-shi Fukuoka 819-0395 (JP); KIYAMA Nariaki, Fukuoka-shi Fukuoka 819-0395 (JP); SAITO Makoto, Fukuoka-shi Fukuoka 819-0395 (JP); YAMANISHI Yoko, Fukuoka-shi Fukuoka 819-0395 (JP); YAMAGISHI Mai, Asaka-shi Saitama 351-0022 (JP)
(74) Representative: Strehl & Partner mbB
(86) International application number: PCT/JP2024/017186
(87) International publication number: WO 2024/232402

(57) **Abstract**

The present disclosure provides a pipetting device including: a tubular tube portion configured to aspirate and dispense an object via working fluid; a drive unit configured to drive a movable portion configured to be movable; and a mounting unit configured to detachably receive a pump unit, the pump unit being configured to store the working fluid and to aspirate the working fluid from the tube portion and dispense the working fluid into the tube portion in response to movement of the movable portion. The amount of the working fluid aspirated or dispensed in response to a predetermined amount of movement of the movable portion varies depending on whether a first pump unit or a second pump unit is attached as the pump unit to the mounting unit.

## Description

### Technical Field

The present disclosure relates to a pipetting device, a pipetting system, and a pump component.

### Background Art

Patent Document 1 discloses a dispensing apparatus including a glass pipette, a tubular elastic member, a rod-shaped member, and a piezoelectric element actuator. A portion of the tubular elastic member located adjacent to a first open end thereof covers a portion of the glass pipette located adjacent to an opening portion thereof. A portion of the tubular elastic member located adjacent to a second open end thereof covers at least a forward end portion of the rod-shaped member. When the piezoelectric element actuator pushes the rod-shaped member toward the opening portion of the glass pipette, the tubular elastic member deforms such that the volume of the internal space of the tubular elastic member decreases.

### Citation List

### Patent Literature

Patent Document 1: WO2018/235804 A1

### Summary of Invention

### Technical Problem

Pipetting devices for aspirating and dispensing micrometer-sized objects, such as particles, cells, and microalgae, are known. However, it has been difficult for a single conventional pipetting device to aspirate and dispense various types of objects with different sizes.

It is an object of the present disclosure to enable a pipetting device to aspirate and dispense objects under conditions adapted to their respective sizes.

### Solution to Problem

To achieve the above object, the techniques disclosed herein provide a pipetting device including: a tubular tube portion configured to aspirate and dispense an object via working fluid; a drive unit configured to drive a movable portion configured to be movable; and a mounting unit configured to detachably receive a pump unit, the pump unit being configured to store the working fluid and to aspirate the working fluid from the tube portion and dispense the working fluid into the tube portion in response to movement of the movable portion. The amount of the working fluid aspirated or dispensed in response to a predetermined amount of movement of the movable portion varies depending on whether a first pump unit or a second pump unit is attached as the pump unit to the mounting unit.

The first pump unit and the second pump unit may each include: a pump chamber configured to store the working fluid; and a deformable portion disposed to face the pump chamber and configured to deform in response to movement of the movable portion.

The movable portion of the drive unit may be configured to deform the deformable portion of the first pump unit or the second pump unit attached to the mounting unit, without coming into contact with the working fluid.

The pipetting device may further include a supply unit configured to supply working fluid from outside to the pump chamber of the first pump unit or the second pump unit attached to the mounting unit.

To achieve the above object, the techniques disclosed herein also provide a pipetting system including: a tubular tube portion configured to aspirate and dispense an object via working fluid; a drive unit configured to drive a movable portion configured to be movable; a first pump unit configured to aspirate the working fluid from the tube portion and dispense the working fluid into the tube portion in response to movement of the movable portion, the first pump unit including a first deformable portion disposed to face a first pump chamber at one side thereof and to contact the movable portion at the other side thereof, the first pump chamber being configured to store the working fluid; and a second pump unit configured to aspirate the working fluid from the tube portion and dispense the working fluid into the tube portion in response to movement of the movable portion, the second pump unit including a second deformable portion disposed to face a second pump chamber at one side thereof and to contact the movable portion at the other side thereof, the second deformable portion having a structure different from a structure of the first deformable portion, the second pump chamber being configured to store the working fluid.

The first deformable portion and the second deformable portion may each be formed in a plate shape.

The first deformable portion and the second deformable portion may differ in length in a direction transverse to a direction of movement of the movable portion.

The first deformable portion and the second deformable portion may differ in thickness in a direction of movement of the movable portion.

The first pump unit may have a plate-shaped structure in which the first deformable portion, the first pump chamber, and a first channel portion configured to allow for flow of the working fluid between the first pump chamber and the tube portion are integrally formed, and the second pump unit may have a plate-shaped structure in which the second deformable portion, the second pump chamber, and a second channel portion configured to allow for flow of the working fluid between the second pump chamber and the tube portion are integrally formed.

To achieve the above object, the techniques disclosed herein also provide a pump component configured to be detachably attached to a pipetting device having a tubular tube portion for aspirating and dispensing an object via working fluid, and to vary aspiration and dispensing characteristics of the tube portion. The pump component includes: a pump chamber configured to store the working fluid; a deformable portion disposed to face the pump chamber and configured to deform under an external force; and a channel portion configured to form a channel for the working fluid between the pump chamber and the tube portion.

To achieve the above object, the techniques disclosed herein also provide a pipetting device including: a tubular tube portion configured to aspirate and dispense an object via working fluid; a drive unit configured to drive a movable portion configured to be movable; and a mounting unit configured to detachably receive a pump unit, the pump unit being configured to aspirate the working fluid from the tube portion and dispense the working fluid into the tube portion in response to movement of the movable portion. The amount of the working fluid aspirated or dispensed in response to a predetermined amount of movement of the movable portion varies depending on whether a first pump unit or a second pump unit is attached as the pump unit to the mounting unit. The first pump unit and the second pump unit each include a pump chamber configured to store working fluid, an operation portion configured to operate the working fluid in the pump chamber in response to movement of the movable portion, and a connection portion configured to connect to the mounting unit. The operation portion of the first pump unit and the operation portion of the second pump unit differ in shape from each other. The connection portion of the first pump unit and the connection portion of the second pump unit each have a shape that allows the connection portion to be attached to the same mounting unit.

The pump unit may include an elastic portion configured to form the pump chamber and to be elastically deformable, and the elastic portion may include a first joint portion configured to be joined to the operation portion and a second joint portion configured to be joined to the tube portion.

The pump unit may be configured to be magnetically attached to the mounting unit.

An end portion of the pump unit that contacts the movable portion may have a rounded end.

### Advantageous Effects of Invention

The techniques disclosed herein enable a pipetting device to aspirate and dispense objects under conditions adapted to their respective sizes.

### Brief Description of Drawings

FIG. 1 is an overall perspective view of a pipetting device of an exemplary embodiment.
FIG. 2 is an exploded perspective view of the pipetting device of the embodiment.
FIG. 3 is a cross-sectional view of a capillary unit of the embodiment.
FIG. 4 is an exploded perspective view of a control unit of the embodiment.
FIG. 5 is an overall perspective view of a microfluidic chip of the embodiment.
FIG. 6 illustrates the microfluidic chip of the embodiment.
FIG. 7 is a cross-sectional view of the microfluidic chip of the embodiment.
FIG. 8 is an exploded perspective view of a valve unit and a channel forming portion of the embodiment.
FIG. 9 illustrates a method for manufacturing the microfluidic chip of the embodiment.
FIG. 10 illustrates an operation of a supply unit of the embodiment.
FIG. 11 illustrates an operation of the microfluidic chip of the embodiment.
FIG. 12 illustrates the relationship between operation volume and input voltage for a replaceable microfluidic chip.
FIG. 13 is an overall perspective view of a pipetting device of a second embodiment.
FIG. 14 is a cross-sectional view of the pipetting device of the second embodiment.
FIG. 15 is an overall perspective view of an elastic body of the second embodiment.
FIG. 16 is a cross-sectional view of the elastic body of the second embodiment.
FIG. 17 is a perspective view of a base portion of the second embodiment.
FIG. 18 is a cross-sectional view of the base portion of the second embodiment.
FIG. 19 is an enlarged cross-sectional view of the pipetting device of the second embodiment.
FIG. 20 illustrates a control unit of the second embodiment.
FIG. 21 illustrates preparation of the pipetting device of the second embodiment.

### Description of Embodiments

Exemplary embodiments of the present disclosure will now be described with reference to the appended drawings.

### (First Embodiment)

A pipetting device 1 according to a first embodiment will be described.

### (Pipetting Device 1)

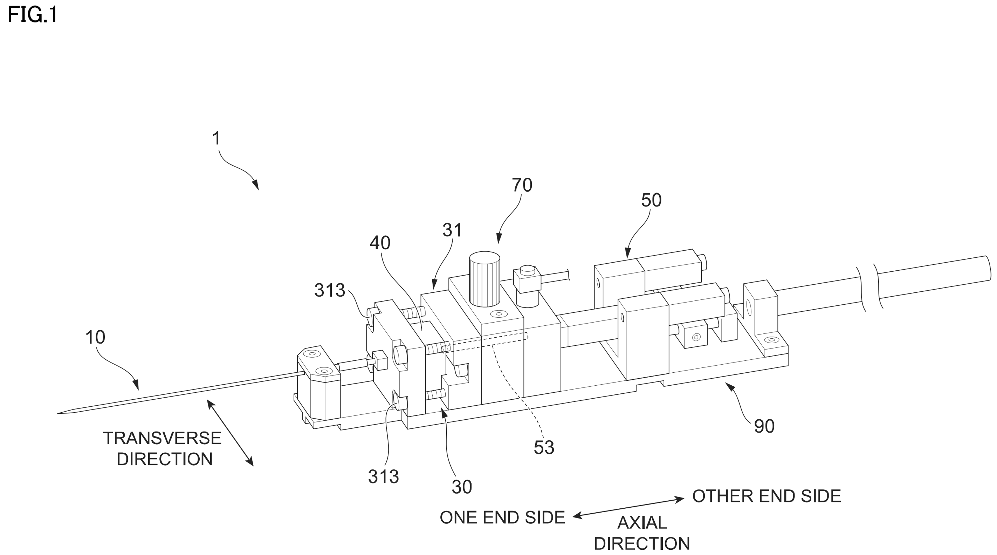

FIG. 1 is an overall perspective view of the pipetting device 1 of the present embodiment.

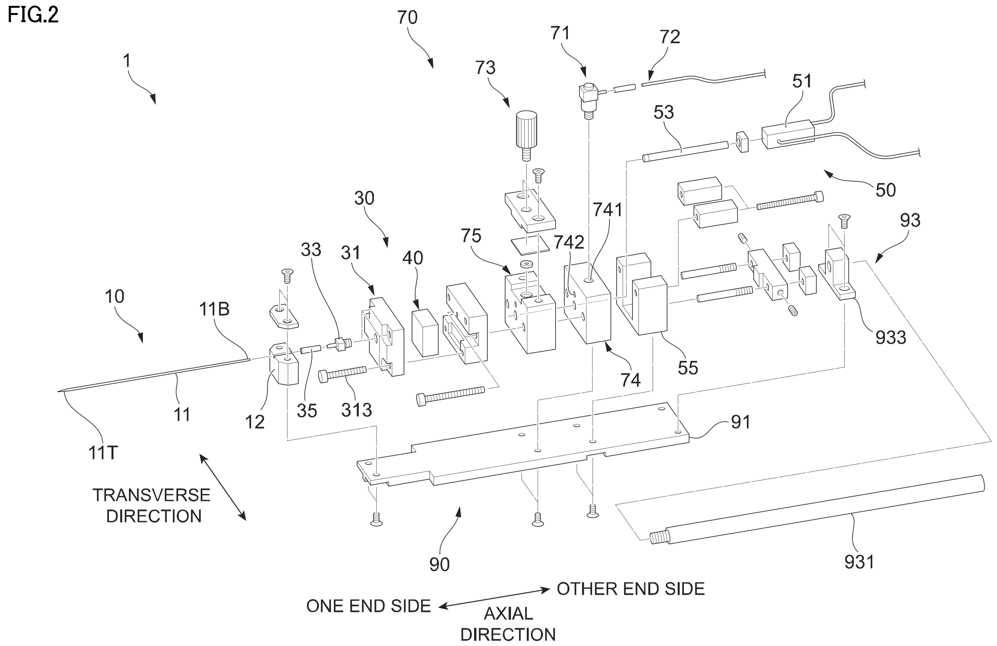

FIG. 2 is an exploded perspective view of the pipetting device 1 of the present embodiment.

As shown in FIG. 1, the pipetting device 1 of the present embodiment includes a capillary unit 10 configured to aspirate and dispense samples and other objects, a control unit 30 configured to control the working fluid in the capillary unit 10, and a drive unit 50 configured to actuate the control unit 30. The pipetting device 1 of the present embodiment further includes a supply unit 70 configured to supply working fluid to the control unit 30, and a housing unit 90 configured to hold various components constituting the pipetting device 1.

As shown in FIG. 1, the pipetting device 1 of the present embodiment is formed in a generally rod-like shape extending in one direction. In the present embodiment, the left side of the pipetting device 1 in FIG. 1 is referred to as one end side, and the right side thereof in FIG. 1 is referred to as the other end side. For the purpose of describing the pipetting device 1 of the present embodiment, the direction along a rod 53 (described below) of the drive unit 50 is referred to as an "axial direction," while the direction substantially perpendicular to the axial direction (for example, the direction oriented at an angle of 85 to 95 degrees with respect to the axial direction) is referred to as a "transverse direction."

The pipetting device 1 of the present embodiment is used to aspirate and dispense micrometer-sized objects, such as particles, cells, and microalgae. In particular, the pipetting device 1 of the present embodiment is used to isolate various types of micrometer-sized objects with different sizes and motility, ranging from relatively small, micrometer-sized objects, such as single cells, to relatively large, micrometer-sized motile cells, such as *Euglena gracilis* and *Volvox carteri.* That is, the pipetting device 1 of the present embodiment can be used for targets of various sizes. In addition, the pipetting device 1 of the present embodiment has high speed and high resolution.

In the present embodiment, the pipetting device 1 includes a tubular capillary unit 10 configured to aspirate and dispense objects via a working fluid, a drive unit 50 configured to drive a movable rod 53, and a mounting unit 31 configured to detachably receive a microfluidic chip 40. The microfluidic chip 40 is configured to store the working fluid and to aspirate the working fluid from the capillary unit 10 and dispense the working fluid to the capillary unit 10 in response to movement of the rod 53. In the present embodiment, the pipetting device 1 is configured such that the amount of working fluid aspirated or dispensed in response to a predetermined amount of movement of the rod 53 varies depending on whether a first microfluidic chip 401 (described below) or a second microfluidic chip 402 (described below) is attached as the microfluidic chip 40 to the mounting unit 31.

The components of the pipetting device 1 of the present embodiment are described in detail below.

### (Capillary Unit 10)

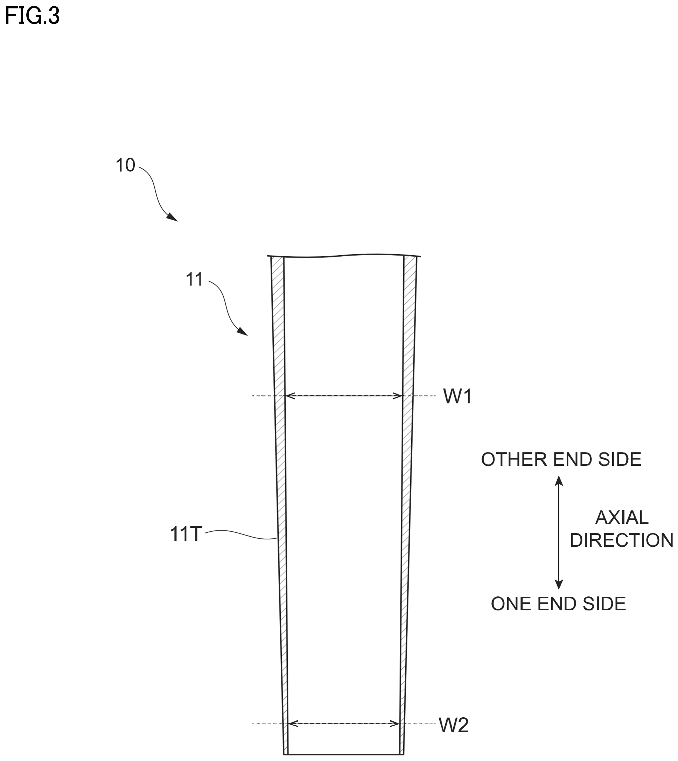

FIG. 3 is a cross-sectional view of the capillary unit 10 of the present embodiment.

As shown in FIG. 2, the capillary unit 10 includes a capillary 11 and a capillary holder 12 configured to hold the capillary 11.

The capillary 11 is a hollow rod-shaped member extending in one direction. In the present embodiment, the capillary 11 may be made of glass. The capillary 11 includes a distal end 11T located at the one end side in the axial direction and a base end 11B located at the other end side in the axial direction. As shown in FIG. 3, the distal end 11T has a tapered shape. In the present embodiment, the inner diameter W2 of the distal end 11T at the one end side is smaller than the inner diameter W1 thereof at the other end side (W1 > W2). In the present embodiment, the inner diameter of the distal end 11T gradually decreases from the other end side toward the one end side. The base end 11B is secured to the capillary holder 12 of the housing unit 90. In addition, the base end 11B is fluidly connected to a first connection member 33 (described below) of the control unit 30.

In the present embodiment, the capillary unit 10 is configured to be detachably attached to the housing unit 90. In use, the capillary unit 10 is replaceable by a user of the pipetting device 1 depending on the object to be aspirated and dispensed.

In the present embodiment, the capillary unit 10 is filled with an incompressible working fluid mainly composed of water, oil, or the like. The capillary unit 10 aspirates and dispenses minute objects, such as cells, via the working fluid flowing inside the capillary unit 10.

By way of example, the capillary unit 10 of the present embodiment shown in FIG. 1 is formed in a straight shape. However, the form of the capillary unit 10 is not limited to this. In one alternative example, the capillary unit 10 may be formed in an L-shape as a whole, consisting of a straight portion extending along the axial direction and a bent portion extending along the transverse direction.

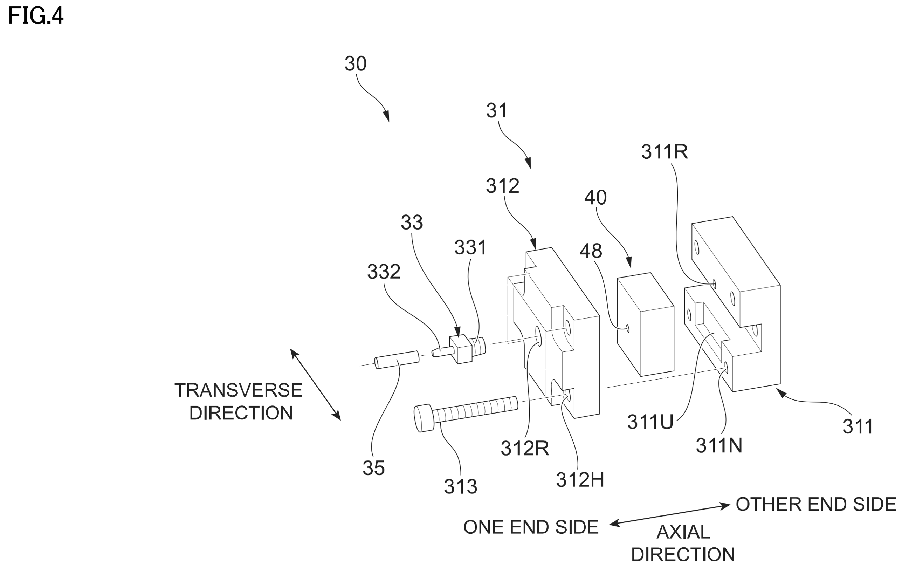

FIG. 4 is an exploded perspective view of the control unit 30 of the present embodiment.

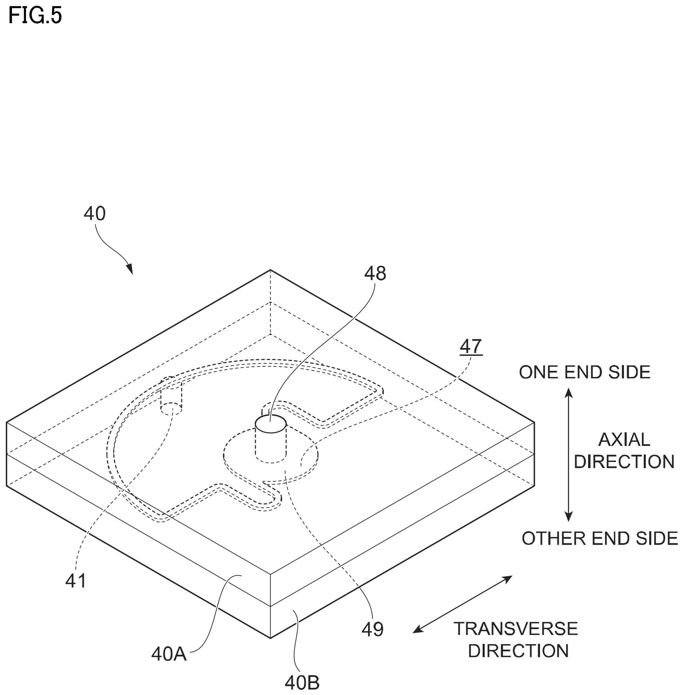

FIG. 5 is an overall perspective view of the microfluidic chip 40 of the present embodiment. The figure depicts a perspective view of the microfluidic chip 40 as seen from the one end side.

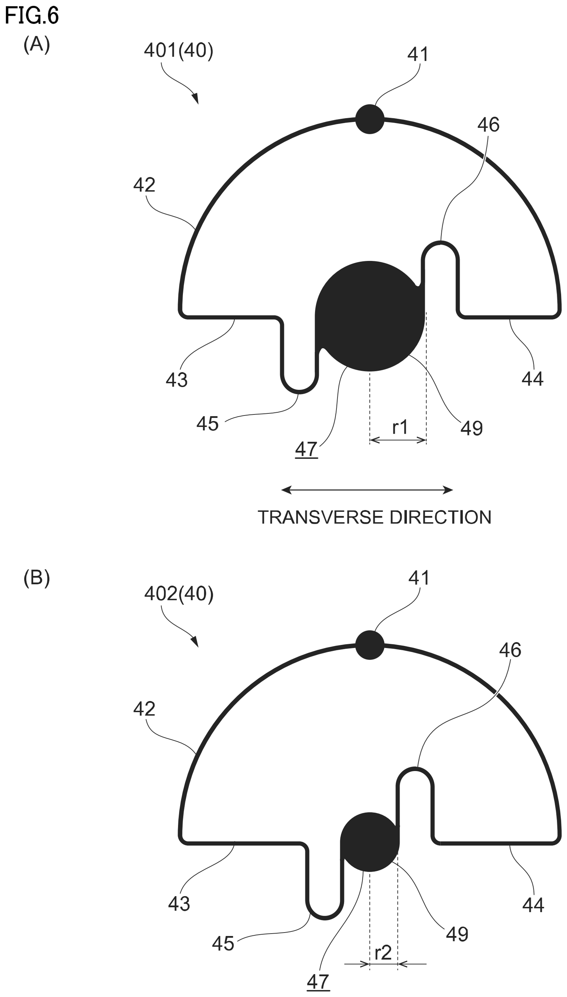

FIG. 6 illustrates the microfluidic chip 40 of the present embodiment.

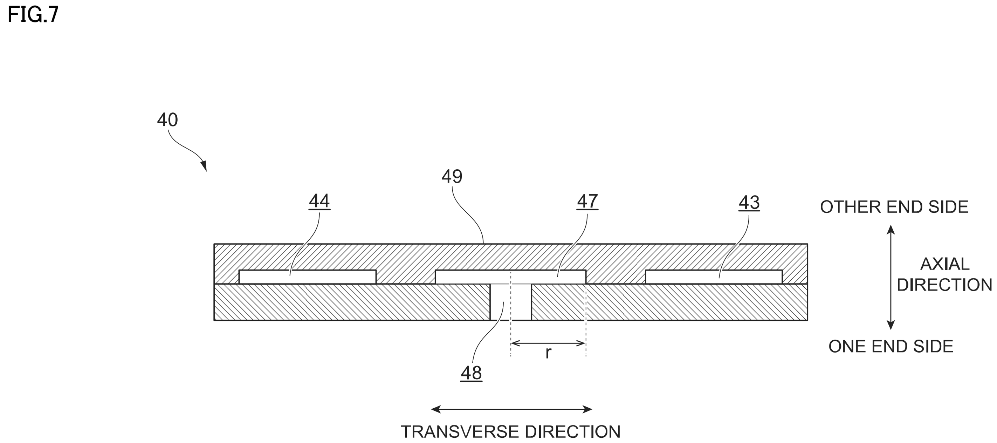

FIG. 7 is a cross-sectional view of the microfluidic chip 40 of the present embodiment.

### (Control Unit 30)

As shown in FIG. 4, the control unit 30, which controls the flow of the working fluid in the capillary unit 10, includes the microfluidic chip 40, the mounting unit 31 configured to receive the microfluidic chip 40, and a first connection member 33 and a second connection member 35 configured to connect the microfluidic chip 40 to the capillary unit 10.

In the present embodiment, the pipetting device 1 employs a first microfluidic chip 401 and a second microfluidic chip 402 (see FIG. 6). However, in the description of the present embodiment, the first and second microfluidic chips 401 and 402 may be collectively referred to as the "microfluidic chip 40" unless the distinction is necessary.

As shown in FIG. 5, the microfluidic chip 40 is a relatively thin, plate-shaped member. In the present embodiment, the microfluidic chip 40 may be made of a synthetic resin such as cyclo olefin polymer (COP). COP has extremely low water absorption and excellent dimensional stability. In addition, COP is highly suitable for precision molding because molded products made of COP exhibit little warpage or deformation. In the present embodiment, the microfluidic chip 40 includes internal channels through which the working fluid flows.

In the present embodiment, the microfluidic chip 40 is composed of multiple (for example, two in the present embodiment) layers, including a first layer 40A provided at the one end side and a second layer 40B provided at the other end side.

As shown in FIGS. 5 and 6, the microfluidic chip 40 includes a supply connection channel 41 fluidly connected to the supply unit 70, a first channel 42 connected to the supply connection channel 41, a second channel 43 connected to one end of the first channel 42, and a third channel 44 connected to the other end of the first channel 42. The microfluidic chip 40 further includes a fourth channel 45 connected to the second channel 43 and a fifth channel 46 connected to the third channel 44. The microfluidic chip 40 further includes a pump chamber 47 connected to the second and third channels 43 and 44 and configured to store the working fluid, and a tube connection channel 48 fluidly connected to the capillary unit 10. The microfluidic chip 40 further includes a diaphragm portion 49 at the other end side relative to the pump chamber 47.

As shown in FIG. 5, the supply connection channel 41 is formed along the axial direction in a substantially straight shape. The supply connection channel 41 is a cylindrical channel through which the working fluid flows. The supply connection channel 41 is connected at its one end to a first mounting channel 311R of a first mounting portion 311 (see FIG. 4) and connected at its other end to the first channel 42. In the present embodiment, the supply connection channel 41 is connected to a central portion of the arc-shaped first channel 42.

As shown in FIGS. 6(A) and 6(B), the first channel 42 is formed in a substantially arc shape on a plane along the transverse direction (hereinafter referred to as the "transverse plane"). The first channel 42 is a channel through which the working fluid flows. The first channel 42 is connected at the central portion of the arc to the supply connection channel 41, connected at its one end of the arc to the second channel 43, and connected at its other end of the arc to the third channel 44. As such, in the present embodiment, the first channel 42 allows the working fluid flowing in from the supply unit 70 to be distributed to the second and third channels 43 and 44 and then to flow into the pump chamber 47.

The second channel 43 is formed in a substantially straight shape on the same transverse plane as the first channel 42 and allows the working fluid to flow therethrough. The second channel 43 is connected at its one end to the first channel 42 and connected at its other end to the fourth channel 45.

The third channel 44 is formed in a substantially straight shape on the same transverse plane as the first channel 42 and allows the working fluid to flow therethrough. The third channel 44 is connected at its one end to the first channel 42 and connected at its other end to the fifth channel 46.

The fourth channel 45 is formed in a U-shape on the same transverse plane as the second channel 43 and allows the working fluid to flow therethrough. The fourth channel 45 is connected at its one end to the second channel 43 and connected at its other end to the pump chamber 47.

The fifth channel 46 is formed in a U-shape on the same transverse plane as the third channel 44 and allows the working fluid to flow therethrough. In the present embodiment, the fifth channel 46 is formed at a position point-symmetric to the fourth channel 45 with respect to the pump chamber 47. The fifth channel 46 is connected at its one end to the third channel 44 and connected at its other end to the pump chamber 47.

The pump chamber 47 is formed on the same transverse plane as the first channel 42, the second channel 43, the third channel 44, the fourth channel 45, and the fifth channel 46 described above. The pump chamber 47 includes a space (chamber) for storing a predetermined amount of the working fluid. In the present embodiment, the pump chamber 47 is formed in a substantially circular shape. In the present embodiment, the pump chamber 47 has the same thickness as the first channel 42, second channel 43, third channel 44, fourth channel 45, and fifth channel 46.

In the present embodiment, the pump chamber 47 is configured to be deformable in response to deformation of the diaphragm portion 49. As the diaphragm portion 49 deforms, the pump chamber 47 changes its volume in which the working fluid is stored. Depending on the change in volume, the pump chamber 47 aspirates the working fluid from the capillary unit 10 through the channels or dispenses the working fluid into the capillary unit 10 through the channels.

As shown in FIG. 5, the tube connection channel 48 is a cylindrical channel formed along the axial direction in a substantially straight shape and through which the working fluid flows. The tube connection channel 48 is connected at the other end side to the pump chamber 47 and connected at the one end side to a second mounting channel 312R of a second mounting portion 312 (see FIG. 4). The inner diameter of the tube connection channel 48 is smaller than that of the pump chamber 47 and larger than that of the supply connection channel 41.

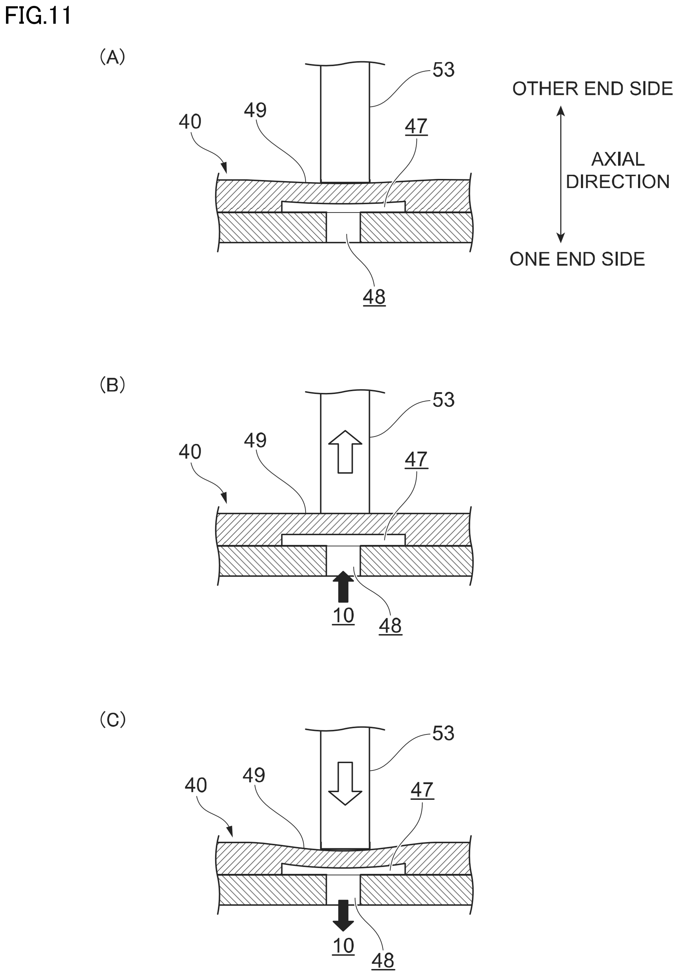

As shown in FIG. 7, the diaphragm portion 49 is provided at the other end side of the microfluidic chip 40. Also, the diaphragm portion 49 is provided at the other end side relative to the pump chamber 47. The diaphragm portion 49 is formed in a plate shape, like a membrane, for example. In the present embodiment, the diaphragm portion 49 faces an end portion on the one end side of a rod 53 (described below) of the drive unit 50 (see FIG. 11). In the present embodiment, the thickness of the diaphragm portion 49 is smaller than the radius of the pump chamber 47. In the present embodiment, the diaphragm portion 49 is formed to be approximately 0.9 mm thick, for example.

In the present embodiment, the diaphragm portion 49 is made of a material such as a synthetic resin and has elasticity. The diaphragm portion 49 is deformable under an external force applied from the rod 53. Furthermore, when the external force is removed from the diaphragm portion 49 in the deformed state, it can return to its original shape by its restoring force.

When the diaphragm portion 49 is deformed toward the one end side in the axial direction under an external force, it reduces the volume of the pump chamber 47 compared to before this deformation. On the other hand, when the diaphragm portion 49 is deformed toward the other end side in the axial direction upon removal of the external force, it increases the volume of the pump chamber 47 compared to before this deformation. In this manner, the diaphragm portion 49 varies the volume of the pump chamber 47 through deformation.

The thickness of the diaphragm portion 49 is set based on the maximum frequency of a piezoelectric element 51 (described below). In the present embodiment, the natural frequency of the diaphragm portion 49 is set higher than the maximum frequency of the piezoelectric element 51. Here, the natural frequency of the diaphragm portion 49 is determined by the rigidity of the diaphragm portion 49, i.e., its thickness. In the present embodiment, the response speed of aspiration and dispensing in the capillary unit 10 is increased by using the pump chamber 47 with the diaphragm portion 49.

In the present embodiment, the pipetting device 1 is configured to vary the volume of the pump chamber 47 using the diaphragm portion 49. This configuration makes it possible to easily adjust the natural frequency of the diaphragm portion 49 according to its thickness design.

In the present embodiment, at least two types of microfluidic chips 40 are used in the pipetting device 1.

As shown in FIGS. 6(A) and 6(B), the first microfluidic chip 401 and the second microfluidic chip 402 differ in the radius (diameter) of the diaphragm portion 49 (pump chamber 47). In the present embodiment, the drive unit 50 is operative to deform the pump chamber 47 by means of a rod 53 (described below) that is configured to move along the axial direction. The first microfluidic chip 401 and the second microfluidic chip 402 differ in the length of the diaphragm portion 49 in the transverse direction transverse to the direction of movement of the rod 53. That is, the first microfluidic chip 401 and the second microfluidic chip 402 differ in the area of the surface facing the axial direction in which the rod 53 moves. Thus, for example, at the same axial stroke of the rod 53, the flow rate of the working fluid aspirated or dispensed by the pump chamber 47 differs between the first microfluidic chip 401 and the second microfluidic chip 402.

In the present embodiment, as a result of the difference in the radius of the pump chamber 47, the first microfluidic chip 401 and the second microfluidic chip 402 differ in the maximum volume of the working fluid that can be stored in the pump chamber 47. Additionally, due to the difference in the shape of the pump chamber 47, the first microfluidic chip 401 and the second microfluidic chip 402 differ in the shapes of the second channel 43, third channel 44, fourth channel 45, and fifth channel 46. However, the first microfluidic chip 401 and the second microfluidic chip 402 have the same basic structure, except for the pump chamber 47 and the shapes of the respective channels resulting from the difference in the shape of the pump chamber 47.

In the first microfluidic chip 401 shown in FIG. 6(A), the radius r1 of the pump chamber 47 is set to approximately 2 mm. On the other hand, in the second microfluidic chip 402 shown in FIG. 6(B), the radius r2 of the pump chamber 47 is set to approximately 1 mm. Accordingly, the working fluid capacity of the pump chamber 47 of the first microfluidic chip 401 is larger than that of the pump chamber 47 of the second microfluidic chip 402. As such, the first microfluidic chip 401 and the second microfluidic chip 402 differ in the capacity of the pump chamber 47.

While the present embodiment illustrates the use of two types of microfluidic chips 40 in the pipetting device 1, the present disclosure is not limited to this embodiment. For example, three or more types of microfluidic chips 40 having different radii r of the pump chamber 47 may be used in the pipetting device 1. In this case as well, multiple types of microfluidic chips 40 share a common external shape to allow them to be attached to the mounting unit 31. In addition, the positions and shapes of the supply connection channel 41 and the tube connection channel 48 are common across all types of microfluidic chips 40.

As shown in FIG. 4, the mounting unit 31 includes a first mounting portion 311 provided at the other end side and a second mounting portion 312 provided at the one end side. In the present embodiment, the mounting unit 31 is configured to hold the microfluidic chip 40 between the first and second mounting portions 311 and 312. The first and second mounting portions 311 and 312 are secured to each other by securing members 313. In the present embodiment, the securing member 313 may be a male screw.

The first mounting portion 311 includes secured portions 311N configured to engage with the respective securing member 313. In the present embodiment, each secured portion 311N may have a female thread corresponding to the securing member 313 implemented as a male screw.

The first mounting portion 311 includes a recess 311U. The recess 311U is shaped to conform to the external shape of the end portion on the other end side of the microfluidic chip 40 so that the end portion is fitted into the recess 311U. The recess 311U of the first mounting portion 311 defines the position to which the microfluidic chip 40 is to be attached. As such, in the present embodiment, the first mounting portion 311 structurally guides the mounting position of the microfluidic chip 40.

The first mounting portion 311 includes a first mounting channel 311R fluidly connected to the supply connection channel 41 (see FIG. 5) of the microfluidic chip 40. The first mounting channel 311R is connected at the one end side to the supply connection channel 41, and connected at the other end side to a second outlet portion 751 (described below) of the supply unit 70.

The first mounting portion 311 also includes a through-hole (not shown) for supporting the rod 53 (described below) of the drive unit 50 such that the rod 53 is movable in the axial direction. In the present embodiment, the through-hole (not shown) extends through the first mounting portion 311 in the axial direction. The through-hole (not shown) has a radius larger than the outer dimension of the rod 53 (described below).

The second mounting portion 312 has through-holes 312H for passage of the respective securing members 313. The second mounting portion 312 is secured to the first mounting portion 311 via the securing members 313 inserted through the respective through-holes 312H.

The second mounting portion 312 includes a second mounting channel 312R fluidly connected to the tube connection channel 48 of the microfluidic chip 40. The second mounting channel 312R is connected at the one end side to the first connection member 33 and connected at the other end side to the tube connection channel 48.

As shown in FIG. 4, the first connection member 33 includes an other-end-side connection portion 331 fluidly connected to the second mounting portion 312, and a one-end-side connection portion 332 fluidly connected to the capillary unit 10. The other-end-side connection portion 331 is fitted into the second mounting channel 312R. In the present embodiment, the other-end-side connection portion 331 is male-threaded and engaged with a female thread formed on the inside of the second mounting channel 312R. The one-end-side connection portion 332 is connected to the end portion on the other end side of the capillary unit 10 via a second connection member 35.

The second connection member 35 is a cylindrical member. The second connection member 35 may be made of an elastic material such as synthetic rubber. The second connection member 35 receives therein the capillary unit 10 at the one end side and receives therein the first connection member 33 at the other end side. The second connection member 35 thereby secures the capillary unit 10 and the first connection member 33 together. In the present embodiment, the second connection member 35 is used as a securing member to secure the capillary unit 10 and the first connection member 33 together, without forming a channel for the working fluid.

As described above, in the present embodiment, the microfluidic chip 40 includes various channels for flow of the working fluid and the pump chamber 47 for aspirating and dispensing the working fluid. These components are integrally packaged as a single microfluidic chip 40. That is, the microfluidic chip 40 has a structure that cannot be separated into individual components unless it is broken. The microfluidic chip 40 is also configured as a generally rectangular, thin plate-shaped chip. Thus, the pipetting device 1 of the present embodiment provides improved operability when a user attaches or detaches the microfluidic chip 40, which is relatively small, to or from the mounting unit 31.

### (Drive Unit 50)

As shown in FIG. 2, the drive unit 50 includes a piezoelectric element 51 of a piezoelectric type configured to convert voltage into force, a rod 53 configured to move in the axial direction, and a holder 55 configured to hold the components constituting the drive unit 50 on the housing unit 90. The drive unit 50 moves the rod 53 in the axial direction, thereby causing the capillary unit 10, through the control unit 30, to aspirate and dispense an object. The drive unit 50 is controlled by a controller (not shown) configured to adjust the voltage applied to the piezoelectric element 51.

The piezoelectric element 51 deforms at least in the axial direction in response to an input voltage applied thereto. The piezoelectric element 51 is provided at the one end side with the rod 53. The piezoelectric element 51 moves the rod 53 toward the one end side or the other end side in response to an input voltage. The piezoelectric element 51 is controlled by the setting of an electrical input signal. The piezoelectric element 51 always produces a constant amount of displacement in response to a given input voltage. Accordingly, the piezoelectric element 51 allows the amount of displacement to be controlled in response to an input voltage. In this manner, the drive unit 50 allows the stroke and timing of movement of the rod 53 by the piezoelectric element 51 to be accurately controlled.

The rod 53 is a rod-shaped member extending in one direction. The rod 53 is supported by the holder 55 such that the rod 53 is movable along the axial direction. The rod 53 faces the microfluidic chip 40 at the one end side and the piezoelectric element 51 at the other end side. The rod 53 is displaced toward the one end side and the other end side along the axial direction in response to deformation of the piezoelectric element 51. The rod 53 thereby deforms the diaphragm portion 49 of the microfluidic chip 40.

The holder 55 holds the piezoelectric element 51 and the rod 53. The holder 55 secures the piezoelectric element 51 to the housing unit 90. The holder 55 also supports the rod 53 such that the rod 53 is movable in the axial direction.

### (Supply Unit 70)

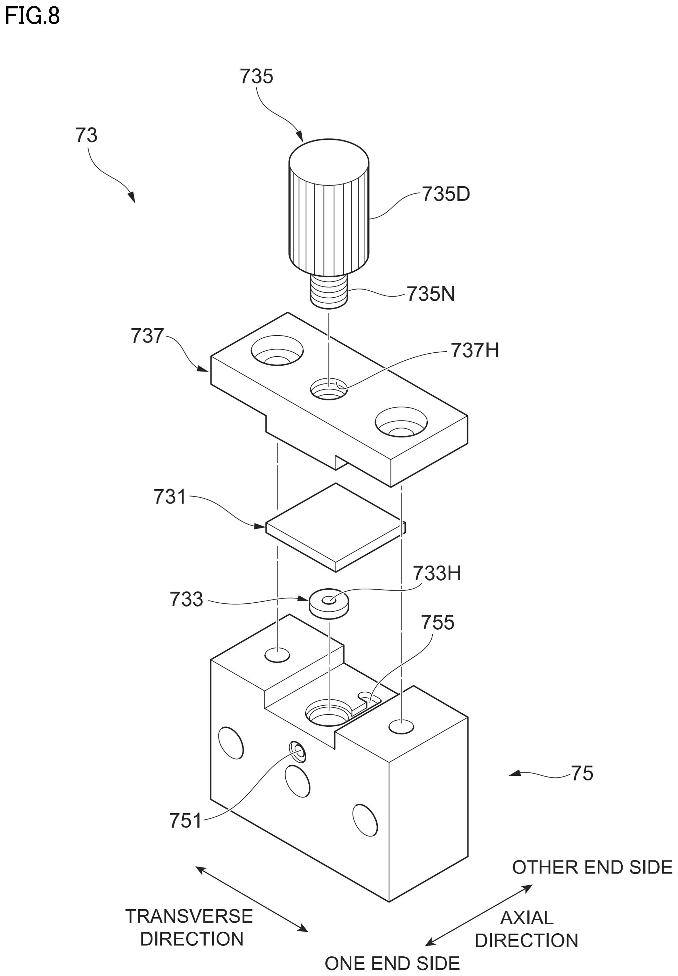

FIG. 8 is an exploded perspective view of a valve unit 73 and a channel forming portion 75 of the present embodiment.

As shown in FIG. 2, the supply unit 70 includes an inlet unit 71 configured to allow for inflow of the working fluid, a valve unit 73 configured to control the flow of the working fluid, and a channel forming portion 75 forming a channel leading to the microfluidic chip 40. The supply unit 70 supplies the working fluid to the microfluidic chip 40.

The inlet unit 71 includes a supply tube 72 and an inflow channel forming portion 74.

The supply tube 72 is fluidly connected at its one end to the valve unit 73 and fluidly connected at its other end to a pumping instrument (not shown), such as a syringe, for pumping the working fluid. The supply tube 72 supplies the working fluid pumped from the pumping instrument to the inflow channel forming portion 74.

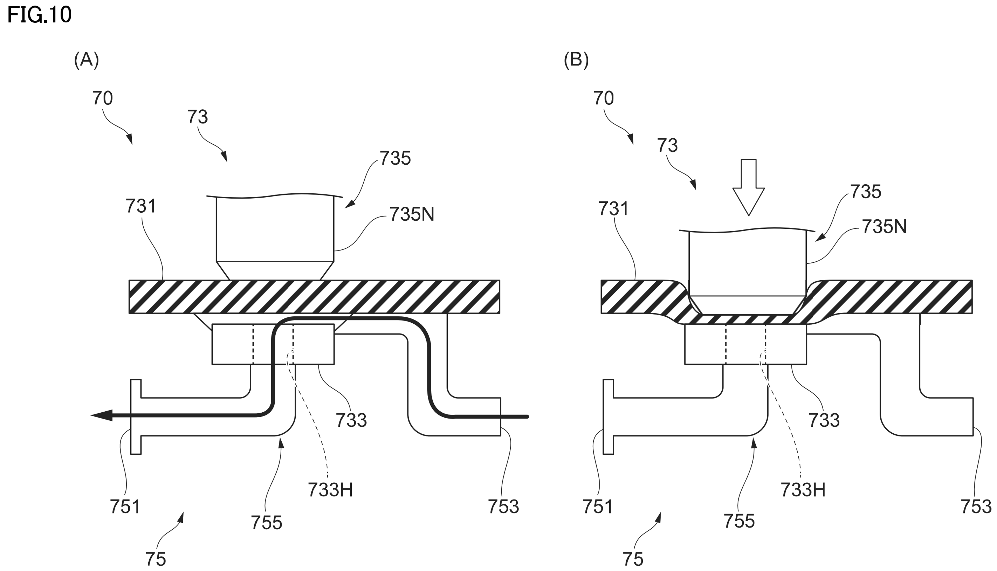

The inflow channel forming portion 74 includes a first inlet portion 741 fluidly connected to the supply tube 72 and a first outlet portion 742 fluidly connected to a second inlet portion 753 of the valve unit 73 (see FIG. 10(A)).

As shown in FIG. 8, the valve unit 73 includes a seat 731, a packing 733, a valve plug 735, and a valve cover 737.

The seat 731 is a thin rectangular sheet. In the present embodiment, the seat 731 may be made of a synthetic rubber such as ethylene propylene rubber (EPDM).

The packing 733 is a disk-shaped member having a through-hole 733H extending therethrough in the thickness direction. The packing 733 may be made of a synthetic rubber such as EPDM. The packing 733 is provided on a channel formed by the channel forming portion 75.

The valve plug 735 includes an operation portion 735D used by a user to rotate the valve plug 735, and an advancing/retracting portion 735N configured to advance and retract relative to the seat 731 as the valve plug 735 is rotated. The operation portion 735D has a cylindrical shape, forming a part to be rotated by the user's fingers. The advancing/retracting portion 735N is male-threaded, with its end portion on the one end side facing the seat 731.

The valve cover 737 has a through-hole 737H provided with a female thread corresponding to the male thread of the advancing/retracting portion 735N. The female thread is formed on the inner circumferential surface of the through-hole 737H. The advancing/retracting portion 735N of the valve plug 735 is fitted into the through-hole 737H. The valve cover 737 is secured to the channel forming portion 75 via securing members such as screws.

The channel forming portion 75 includes a second outlet portion 751 provided at the one end side for outflow of the working fluid, and a second inlet portion 753 (see FIG. 10(A)) provided at the other end side for inflow of the working fluid. The channel forming portion 75 also includes a channel 755 that defines a path for the working fluid between the second inlet portion 753 and the second outlet portion 751.

The second outlet portion 751 is connected to the first mounting channel 311R of the control unit 30 (see FIG. 4). The second inlet portion 753 is connected to the first outlet portion 742 (see FIG. 2) of the inlet unit 71. Accordingly, the channel 755 is connected at the one end side to the first mounting channel 311R via the second outlet portion 751, and connected at the other end side to the first outlet portion 742 via the second inlet portion 753. The channel 755 allows the working fluid that has flowed in from the second inlet portion 753 (see FIG. 10(A)) to flow out through the second outlet portion 751.

### (Housing Unit 90)

As shown in FIG. 2, the housing unit 90 includes a base portion 91 and a held unit 93.

In the present embodiment, the base portion 91 is a plate-shaped member. Various components constituting the pipetting device 1 are secured to the base portion 91 via securing members such as screws.

The held unit 93 includes a shaft 931 and a securing portion 933 configured to secure the shaft 931 to the base portion 91. The shaft 931 is a rod-shaped member extending in the axial direction. The shaft 931 serves as a connection to a manipulator (not shown) for moving the pipetting device 1 of the present embodiment to any position in a three-dimensional direction.

### (Method for Manufacturing the Microfluidic Chip 40)

A method for manufacturing the microfluidic chip 40 of the present embodiment is now described.

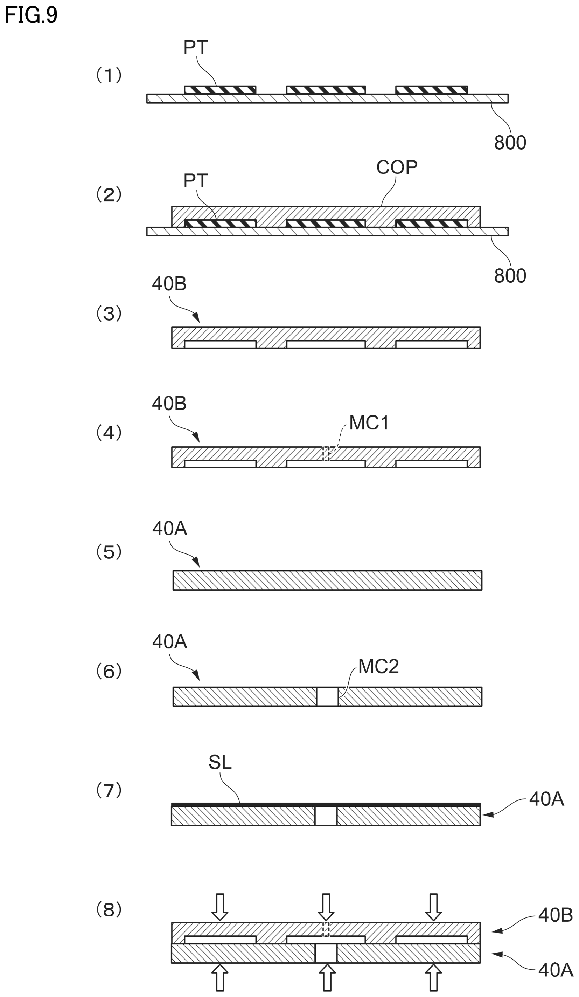

FIG. 9 illustrates a method for manufacturing the microfluidic chip 40 of the present embodiment.

The method for manufacturing the microfluidic chip 40 of the present embodiment is now described. In this method, a first layer 40A and a second layer 40B that define structural portions corresponding to the channels and other features are formed.

As shown in FIG. 9(1), a pattern PT for fabricating the second layer 40B of the present embodiment is formed on a substrate 800. The substrate 800 may be made of, for example, silicon (Si). The pattern PT may be made of a thermosetting epoxy resin. In the present embodiment, the pattern PT corresponds to the shapes of the first channel 42, second channel 43, third channel 44, fourth channel 45, fifth channel 46, pump chamber 47, and diaphragm portion 49, all of which are formed at the other end side of the microfluidic chip 40.

As shown in FIG. 9(2), the substrate 800 and the pattern PT are heated to a predetermined temperature. Then, a synthetic resin base material corresponding to the second layer 40B is pressed against the pattern PT. In the present embodiment, the base material corresponding to the second layer 40B may be COP, which is a thermoplastic resin.

As shown in FIG. 9(3), the base material corresponding to the second layer 40B is formed into a shape corresponding to the pattern PT by being pressed against the heated pattern PT.

As shown in FIG. 9(4), a first shape MC1 corresponding to the supply connection channel 41 is formed in the base material shaped into the pattern PT. In the present embodiment, the first shape MC1 can be formed by a cutting process in which a cutting tool is used to mechanically remove the material.

In this manner, the second layer 40B of the microfluidic chip 40 is obtained.

Then, as shown in FIG. 9(5), a base material for fabricating the first layer 40A of the present embodiment is provided. In the present embodiment, the base material corresponding to the first layer 40A may be COP, similar to that used for the second layer 40B.

As shown in FIG. 9(6), a second shape MC2 corresponding to the tube connection channel 48 is formed in the provided base material for the first layer 40A. In the present embodiment, the second shape MC2 may be formed, for example, by a cutting process.

Then, as shown in FIG. 9(7), an organic solvent SL is applied to the surface of the first layer 40A on the other end side. In the present embodiment, the first layer 40A is immersed in the organic solvent SL, and then spin coating is performed by rotating the first layer 40A at a high speed.

Finally, as shown in FIG. 9(8), the first layer 40A and the second layer 40B are pressed against each other while being heated. The first layer 40A and the second layer 40B are thereby integrated together. This results in a thin, plate-like microfluidic chip 40 having internal channels and other structures.

### (Operation of the Supply Unit 70)

FIG.10 illustrates an operation of the supply unit 70 of the present embodiment.

As shown in FIG. 10(A), when the valve unit 73 of the supply unit 70 is to be opened, the valve plug 735 is operated in a direction away from the seat 731. With the valve unit 73 open, the seat 731 is positioned apart from the packing 733. This allows the working fluid flowing in from the second inlet portion 753 to pass through the channel 755 and the through-hole 733H and flow out from the second outlet portion 751. That is, with the valve unit 73 open, the working fluid is supplied from the supply unit 70 to the microfluidic chip 40.

On the other hand, as shown in FIG. 10(B), when the valve unit 73 of the supply unit 70 is to be closed, the valve plug 735 is operated in a direction toward the seat 731. With the valve unit 73 closed, the seat 731 comes into contact with the packing 733, resulting in the seat 731 closing the through-hole 733H. With the valve unit 73 closed, the working fluid does not flow through the channel 755 of the channel forming portion 75. Also, with the valve unit 73 closed, the working fluid is not supplied from the supply unit 70 to the microfluidic chip 40. Furthermore, with the valve unit 73 closed, the working fluid does not flow out from the microfluidic chip 40 through the channel forming portion 75.

### (Replacement of the Microfluidic Chip 40)

As shown in FIG. 1, in the pipetting device 1 of the present embodiment, the microfluidic chip 40 is attached to the mounting unit 31. In this state, the microfluidic chip 40 is mounted on the pipetting device 1.

On the other hand, as shown in FIG. 2, the mounting unit 31 allows the distance between the first mounting portion 311 and the second mounting portion 312 to be increased by removing the securing members 313. This in turn allows the microfluidic chip 40, which has been held between the first mounting portion 311 and the second mounting portion 312, to be removed. In this state, the microfluidic chip 40 is detached from the pipetting device 1.

Here, when the first microfluidic chip 401 is mounted on the pipetting device 1, the first microfluidic chip 401 can be removed by the above-described operation. Thereafter, the second microfluidic chip 402 is placed between the first mounting portion 311 and the second mounting portion 312. Then, the first mounting portion 311 is secured to the second mounting portion 312 by means of the securing members 313. This allows the second microfluidic chip 402 to be attached to the mounting unit 31. In this state, the microfluidic chip 40 is mounted on the pipetting device 1.

### (Function of the Pipetting Device 1)

FIG.11 illustrates an operation of the microfluidic chip 40 of the present embodiment.

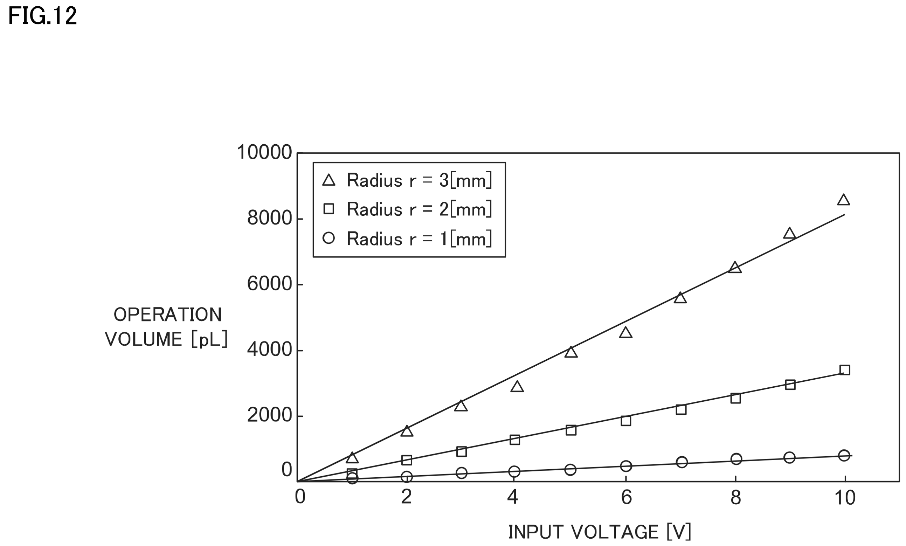

FIG.12 illustrates the relationship between operation volume and input voltage for the microfluidic chip 40.

As shown in FIG. 11(A), the pump chamber 47 is filled with the working fluid. The capillary unit 10 connected to the pump chamber 47 is also filled with the working fluid. The supply unit 70 described above is used to fill the working fluid into the pump chamber 47 and the capillary unit 10. When the pipetting device 1 is operated, the valve unit 73 of the supply unit 70 is in a closed state. This results in the working fluid in the pump chamber 47 flowing only through the tube connection channel 48.

The basic state shown in FIG. 11(A) is a state in which the rod 53 has advanced by a predetermined amount toward the one end side in the axial direction. In this basic state, the diaphragm portion 49 is displaced by the rod 53 toward the one end side. The volume of the pump chamber 47 is reduced compared to when the diaphragm portion 49 is undeformed.

As shown in FIG. 11(B), the rod 53 is moved from its position in the basic state toward the other end side. In the present embodiment, the voltage applied to the piezoelectric element 51 (see FIG. 2) of the drive unit 50 is reduced. This causes the rod 53 to retract from the diaphragm portion 49, resulting in the diaphragm portion 49 being displaced toward the other end side. The volume of the pump chamber 47 is increased compared to that in the basic state. This causes the working fluid in the capillary unit 10 to be drawn into the pump chamber 47. In this manner, the pipetting device 1 allows the object to be aspirated through the capillary unit 10.

On the other hand, as shown in FIG. 11(C), the rod 53 is moved from its position in the basic state toward the one end side. In the present embodiment, the voltage applied to the piezoelectric element 51 (see FIG. 2) of the drive unit 50 is increased. This causes the rod 53 to further press the diaphragm portion 49 toward the one end side from its position in the basic state, resulting in the diaphragm portion 49 being further displaced toward the one end side. The volume of the pump chamber 47 is reduced compared to that in the basic state. This causes the working fluid to flow out from the pump chamber 47. In this manner, the pipetting device 1 allows the object contained in the capillary unit 10 to be dispensed.

The pipetting device 1 of the present embodiment allows the microfluidic chip 40 to be replaced. Furthermore, the operation volume of the object by the capillary unit 10 in response to an input voltage applied to the piezoelectric element 51 of the drive unit 50 can be varied depending on the type of the microfluidic chip 40.

In the graph shown in FIG. 12, the horizontal axis represents the value of the input voltage [V] applied to the piezoelectric element 51, and the vertical axis represents the value of the operation volume [pL], which indicates the flow rate of the working fluid in the capillary unit 10. FIG. 12 shows measurement results of the operation volume in the capillary unit 10 in response to the input voltage applied to the piezoelectric element 51 for microfluidic chips 40 having a diaphragm portion 49 (pump chamber 47) with radii r of 1 mm, 2 mm, and 3 mm, respectively.

As shown in FIG. 12, when the microfluidic chip 40 having a diaphragm portion 49 with a radius r of 1 mm (for example, the microfluidic chip 402) was used, the proportional constant between the input voltage and the operation volume was 83 [pL/V]. When the microfluidic chip 40 having a pump chamber 47 with a radius of 2 mm (for example, the microfluidic chip 401) was used, the proportional constant between the input voltage and the operation volume was 334 [pL/V]. When the microfluidic chip 40 having a pump chamber 47 with a radius of 3 mm was used, the proportional constant between the input voltage and the operation volume was 832 [pL/V]. In this manner, the pipetting device 1 of the present embodiment allows the proportional constant between the input voltage and the operation volume to be varied by using microfluidic chips 40 with different radii r of the diaphragm portion 49.

When the radius r of the pump chamber 47 was set to 1 mm, 2 mm, and 3 mm, the resolutions of the pipetting device 1 of the present embodiment were 0.15 [pL], 0.60 [pL], and 1.50 [pL] (standard deviation: 1.8 mV), respectively. In this manner, the pipetting device 1 of the present embodiment provides both a dynamic range of flow rate for isolating various sizes of objects and a high resolution.

The pipetting device 1 of the present embodiment allows the microfluidic chip 40 to be replaced, making it possible to vary the change in operation volume (hereinafter referred to as "sensitivity") in response to, for example, a certain change in input voltage. Thus, for example, for relatively large cells, a microfluidic chip 40 having relatively high sensitivity is used. On the other hand, for relatively small cells, a microfluidic chip 40 having relatively low sensitivity is used. In this manner, the pipetting device 1 can adjust the operation volume in response to an input voltage according to the size of the object, thereby enabling selective aspiration and dispensing of a target cell while avoiding unintended aspiration of surrounding cells. In this manner, the pipetting device 1 of the present embodiment can aspirate and dispense various objects, such as cells, that differ in size on the micro-order scale, under conditions adapted to their respective sizes, through the selective use of microfluidic chips 40 appropriate for the respective objects.

For example, the pipetting device 1 of the present embodiment allows constant control of the input voltage applied to the piezoelectric element 51, regardless of the type of the microfluidic chip 40. The pipetting device 1 can vary the operation volume depending on the type of the microfluidic chip 40, even when the same input voltage is applied. To adjust the sensitivity, the pipetting device 1 does not need to control, for example, the amount of displacement of the piezoelectric element 51 caused by the input voltage applied thereto. Thus, the pipetting device 1 of the present embodiment ensures stable control of the drive unit 50.

Furthermore, for the pipetting device 1 of the present embodiment, the response time during dispensing and aspiration was evaluated using microfluidic chips 40 having a diaphragm portion 49 (pump chamber 47) with radii r of 1 mm, 2 mm, and 3 mm, respectively. The results showed that the pipetting device 1 of the present embodiment had a response time of 2 ms to 13 ms. As such, the pipetting device 1 of the present embodiment achieved high-speed response of flow rate control on the order of 10 ms with reduced vibration.

Furthermore, the pipetting device 1 of the present embodiment allows for easy setup, for example, when changing the object to be aspirated and dispensed. For example, one may want to perform aspiration and dispensing of another object after aspirating and dispensing one object. In such a case, components that come into contact with the working fluid need to be replaced in order to prevent contamination between different objects. The pipetting device 1 of the present embodiment can be newly set up by replacing the capillary unit 10 and the microfluidic chip 40. That is, the pipetting device 1 of the present embodiment is configured such that, in the microfluidic chip 40 through which the working fluid flows, the rod 53, for example, acts on the pump chamber 47 containing the working fluid through the diaphragm portion 49. Thus, the pipetting device 1 of the present embodiment does not allow the working fluid to come into contact with the components of the drive unit 50 such as the rod 53 and the piezoelectric element 51.

As described above, the pipetting device 1 of the present embodiment allows for aspiration and dispensing of another object by replacing the microfluidic chip 40.

### (Modification)

In the pipetting device 1 of the present embodiment, the circular diaphragm portion 49 is provided corresponding to the circular pump chamber 47; however, the shapes of the diaphragm portion 49 and the pump chamber 47 are not limited to this. For example, the pump chamber 47 and the diaphragm portion 49 may be formed into shapes other than circular ones, such as rectangular or polygonal shapes. In this case, multiple types of microfluidic chips 40 may have different lengths of the pump chamber 47 and the diaphragm portion 49 in the transverse direction transverse to the direction of movement of the rod 53.

### (Modification)

The pipetting device 1 of the present embodiment is configured to control the working fluid stored in the pump chamber 47 by means of the deformable diaphragm portion 49 provided opposite the pump chamber 47; however, the present disclosure is not limited to this embodiment. For example, a non-deformable member, such as a piston, that is displaced in response to movement of the rod 53 of the drive unit 50 may instead be used to control aspiration and dispensing of the working fluid in the pump chamber 47. In this case, depending on the type of the microfluidic chip 40, the cross-sectional area of such a displaceable member, taken in a direction transverse to the direction of movement of the rod 53, may be varied.

### (Modification)

The pipetting device 1 of the present embodiment may employ microfluidic chips 40 with different thicknesses of the diaphragm portion 49 provided to the pump chamber 47. The use of such microfluidic chips 40 having a diaphragm portion 49 with different rigidities can vary the sensitivity of the pipetting device 1. In this manner, the sensitivity of aspiration and dispensing by the capillary unit 10 of the pipetting device 1 may be varied by utilizing the different thicknesses of the diaphragm portion 49.

### (Modification)

The pipetting device 1 of the present embodiment aspirates the working fluid from and dispenses the working fluid to the capillary unit 10 by means of the pump chamber 47 whose volume varies as it deforms in response to displacement of the membrane-shaped diaphragm portion 49. However, the pipetting device of the present disclosure is not limited to such a pump structure. The pipetting device 1 may be composed of multiple pump units having different sensitivities, regardless of the structure of each pump unit.

### (Modification)

In the pipetting device 1 of the present embodiment, the end portion of the rod 53 on the one end side facing the diaphragm portion 49 may be formed in a hemispherical shape. This shape provides stable contact between the diaphragm portion 49 and the rod 53. For example, due to manufacturing tolerances or the mounting angle of the rod 53 in the axial direction, the rod 53 may deviate from its intended position, such as advancing and retracting at an inclination with respect to the diaphragm portion 49. To address this, forming the portion of the rod 53 facing the diaphragm portion 49 into a hemispherical shape allows the rod 53 to make point contact with the diaphragm portion 49. This absorbs the positional deviation of the rod 53 relative to the diaphragm portion 49, thereby providing stable contact between the two components.

### (Modification)

In the pipetting device 1 of the present embodiment, the piezoelectric element 51 changes the volume of the pump chamber 47 through the rod 53; however, the present disclosure is not limited to this embodiment. The piezoelectric element 51 may change the volume of the pump chamber 47 through, for example, a thin plate-shaped member, or may directly change the pump chamber 47 without any intervening member.

### (Modification)

The pipetting device 1 of the present embodiment is configured such that the first microfluidic chip 401 and the second microfluidic chip 402 are separately attached to the mounting unit 31; however, the present disclosure is not limited to this embodiment. For example, the pipetting device 1 may already have both a first module corresponding to the first microfluidic chip 401 and a second module corresponding to the second microfluidic chip 402. In this case, for instance, the first module corresponding to the first microfluidic chip 401 and the second module corresponding to the second microfluidic chip 402 are each held by a rotatable switching mechanism. The pipetting device 1 may then switch between the first module and the second module by rotating the switching mechanism.

In the present embodiment, the pipetting device 1 having the capillary unit 10, the control unit 30, the drive unit 50, the supply unit 70, and the housing unit 90, together with the first microfluidic chip 401 and the second microfluidic chip 402 used in the control unit 30, may be viewed as a pipetting system for aspirating and dispensing an object.

Here, the pipetting device 1 of the first embodiment is an example of the pipetting device. The capillary unit 10 is an example of the tube portion. The drive unit 50 is an example of the drive unit. The rod 53 is an example of the movable portion. The mounting unit 31 is an example of the mounting unit. The first microfluidic chip 401 is an example of the first pump unit (pump unit). The second microfluidic chip 402 is an example of the second pump unit (pump unit). The pump chamber 47 is an example of the first pump chamber (pump chamber) or the second pump chamber (pump chamber). The diaphragm portion 49 is an example of a first deformable portion (deformable portion) or a second deformable portion (deformable portion). The supply connection channel 41, the first channel 42, and the tube connection channel 48 are examples of the channel portion.

### (Second Embodiment)

A pipetting device 2 according to a second embodiment will now be described.

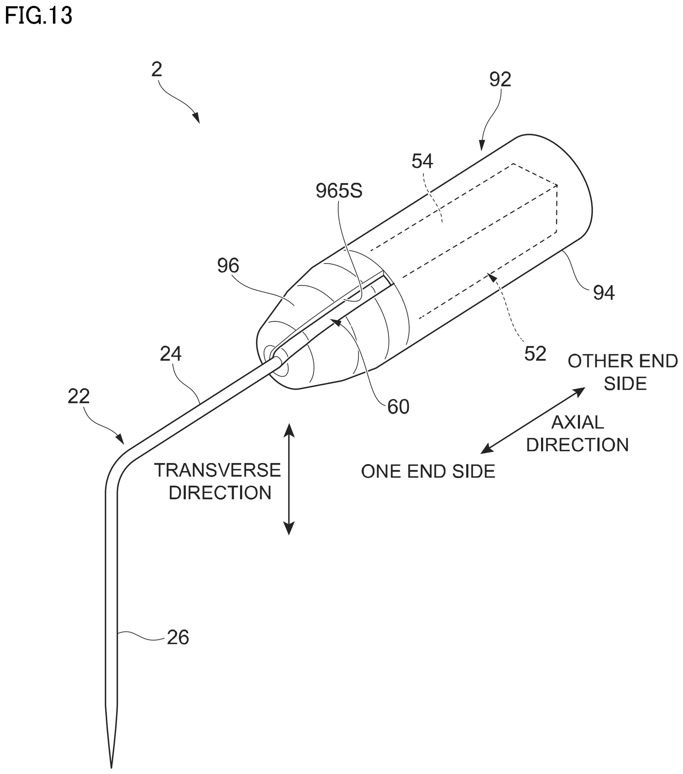

FIG.13 is an overall perspective view of the pipetting device 2 of the second embodiment.

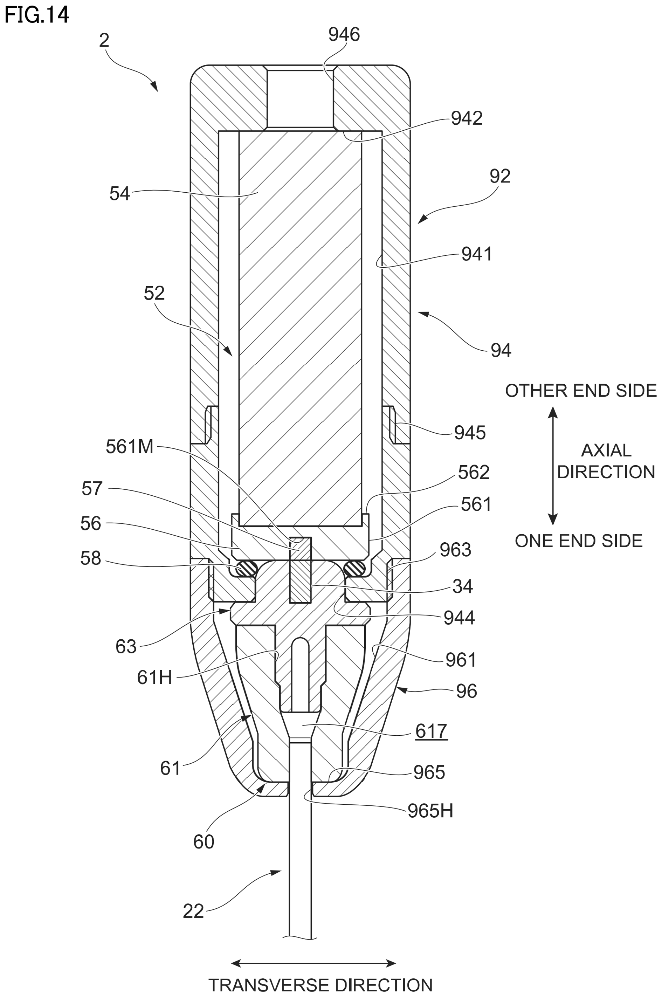

FIG.14 is a cross-sectional view of the pipetting device 2 of the second embodiment.

As shown in FIG. 13, the pipetting device 2 of the second embodiment includes a capillary portion 22 configured to aspirate and dispense samples and other objects, a control unit 60 configured to control the working fluid in the capillary portion 22, a drive unit 52 configured to actuate the control unit 60, and a housing unit 92 configured to hold various components constituting the pipetting device.

The pipetting device 2 of the second embodiment is formed in a generally rod-like shape extending in one direction, except for the capillary portion 22. Here, the left side of the pipetting device 2 in FIG. 13 is referred to as one end side, and the right side thereof in FIG. 13 is referred to as the other end side. For the purpose of describing the pipetting device 2 of the present embodiment, the direction along a piezoelectric element 54 (described below) of the drive unit 52 is referred to as an "axial direction," while the direction substantially perpendicular to the axial direction (for example, the direction oriented at an angle of 85 to 95 degrees with respect to the axial direction) is referred to as a "transverse direction."

The pipetting device 2 of the second embodiment includes the tubular capillary portion 22 configured to aspirate and dispense an object through the working fluid, the drive unit 52 configured to drive a movable plate portion 56 (described below), and the housing unit 92 configured to detachably receive the control unit 60. The control unit 60 is configured to aspirate the working fluid from the capillary portion 22 and dispense the working fluid into the capillary portion 22 in response to movement of the plate portion 56. The pipetting device 2 is configured such that the amount of working fluid aspirated or dispensed in response to a predetermined amount of movement of the plate portion 56 varies depending on whether, as the control unit 60, a first control unit 601 (described below) or a second control unit 602 (described below) is attached to the housing unit 92. Furthermore, each of the first and second control units 601 and 602 includes a pump chamber 617 (described below) configured to store the working fluid, an insertion portion 631 (described below) configured to manipulate the working fluid in the pump chamber 617 in response to movement of the plate portion 56, and a connection portion 635 (described below) configured to be connected to the housing unit 92. The insertion portions 631 of the first and second control units 601 and 602 differ in shape from each other, while the connection portions 635 of the first and second control units 601 and 602 have a shape that allows them to be attached to the same housing unit 92.

The components of the pipetting device 2 of the second embodiment are described in detail below.

### (Capillary Portion 22)

The capillary portion 22 is formed to be hollow. The capillary portion 22 includes, for example, a first capillary 24 extending along the axial direction and a second capillary 26 extending along the transverse direction and connects to the first capillary 24 via a bent portion. That is, in the present embodiment, the capillary portion 22 is generally formed in an L-shape. In the present embodiment, the capillary portion 22 may be made of glass.

In the present embodiment, the capillary portion 22 is configured to be attachable to and detachable from the control unit 60. In use, the capillary portion 22 is replaceable by a user of the pipetting device 2 depending on the object to be aspirated and dispensed.

In the present embodiment, the capillary portion 22 is filled with an incompressible working fluid mainly composed of water, oil, or the like. The capillary portion 22 aspirates and dispenses minute objects, such as cells, via the working fluid flowing inside the capillary portion 22.

It should be noted that the capillary portion 22 is not limited to being, for example, L-shaped as shown in FIG. 13. In an alternative example, the capillary portion 22 may be formed in a generally straight shape, similar to the capillary unit 10 of the first embodiment.

### (Control Unit 60)

As shown in FIG. 14, the control unit 60 for controlling the flow of the working fluid in the capillary portion 22 includes an elastic portion 61 and a base portion 63 connected to the elastic portion 61.

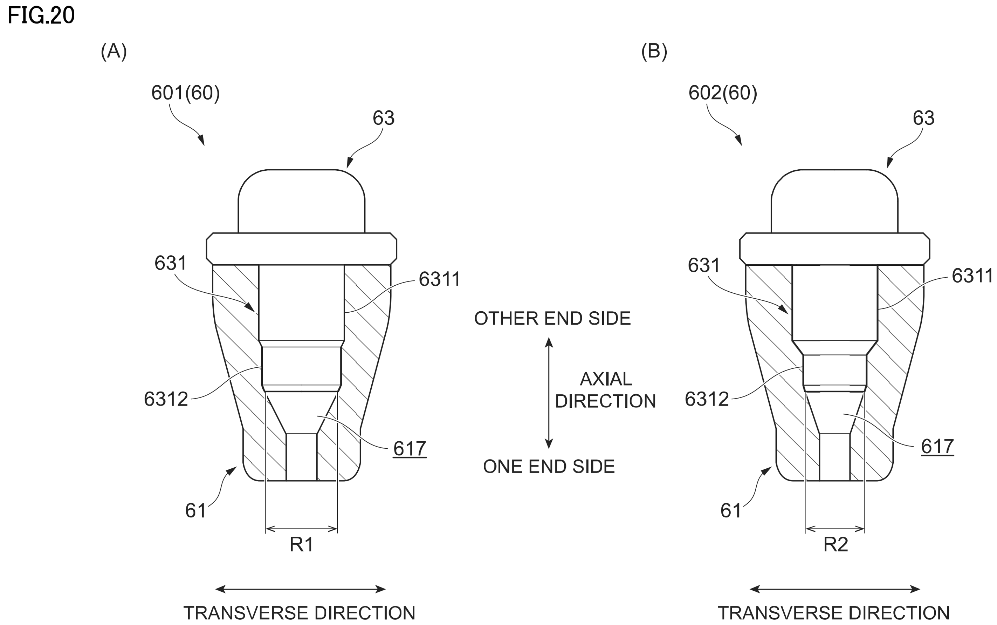

In the present embodiment, the pipetting device 2 includes a first control unit 601 (see FIG. 20(A) below) and a second control unit 602 (see FIG. 20(B) below). However, in the description of the present embodiment, the first and second control units 601 and 602 are collectively referred to as the "control unit 60" unless the distinction is necessary.

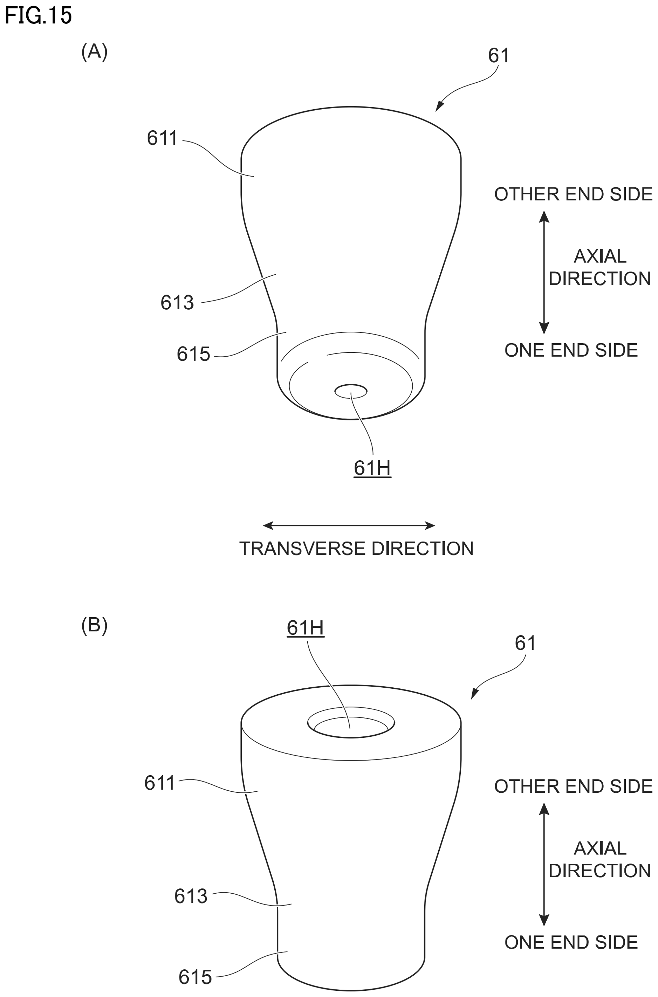

FIG.15 is an overall perspective view of the elastic portion 61 of the second embodiment. FIG.15(A) depicts a perspective view of the elastic portion 61 as seen from the one end side, while FIG.15(B) depicts a perspective view of the elastic portion 61 as seen from the other end side.

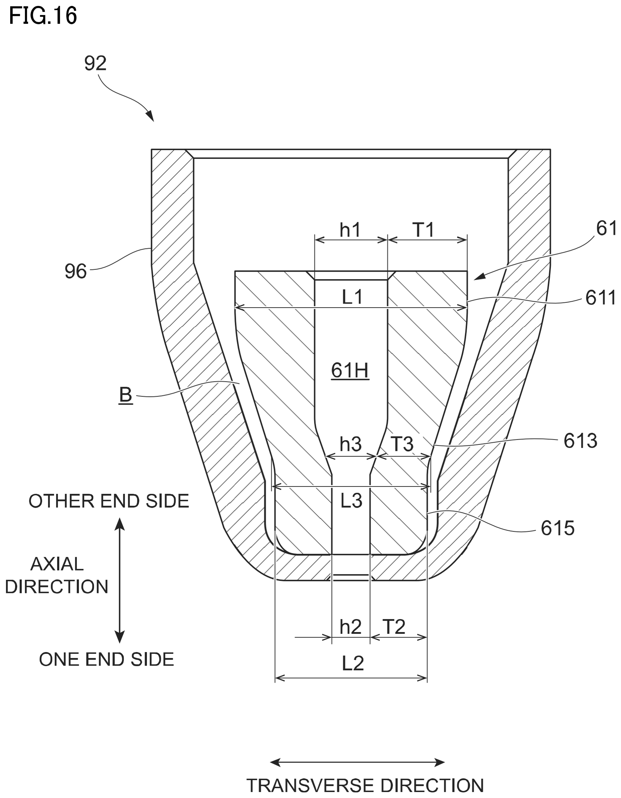

FIG.16 is a cross-sectional view of the elastic portion 61 of the second embodiment. For explanatory purposes, the housing unit 92 is also shown in the figure.

As shown in FIG. 15, the elastic portion 61 is a generally substantially cylindrical member, with the outer diameter at the other end side being larger than that at the one end side. In the present embodiment, the outer diameter refers to the width of a component in the transverse direction. When the component has a circular cross-section, the outer diameter corresponds to its diameter. As shown in FIG. 16, the elastic portion 61 has a through-hole 61H extending therethrough in the axial direction. The elastic portion 61 is elastic and deformable in response to an external force. In the present embodiment, the elastic portion 61 may be made of a synthetic resin such as silicone resin. Silicone resins have extremely low water absorption and also have excellent water repellency and releasability during manufacturing.

The elastic portion 61 is connected to the base portion 63. The elastic portion 61 deforms in response to displacement of the base portion 63. The elastic portion 61 is formed to be softer than the base portion 63. Accordingly, the area of the elastic portion 61 into which the base portion 63 is inserted deforms in conformity with the outer shape of the base portion 63.

As shown in FIG. 16, the elastic portion 61 includes the following structural portions defined by its outer diameter and inner diameter (through-hole 61H). That is, the elastic portion 61 includes a joint portion 611 provided at the other end side, a pump chamber forming portion 613 provided at the one end side relative to the joint portion 611, and a channel joint portion 615 provided at the one end side relative to the pump chamber forming portion 613.

The joint portion 611 serves as a joining section to which the base portion 63 is joined. An insertion portion 631 (described below) of the base portion 63 is inserted into the joint portion 611. In the present embodiment, the joint portion 611 is made integral with the base portion 63 as the insertion portion 631 is press-fitted into the joint portion 611 (see FIG. 14). The joint portion 611 is in close contact with the base portion 63, preventing the working fluid from leaking between the joint portion 611 and the base portion 63.

The pump chamber forming portion 613 is a particularly deformable portion of the elastic portion 61. In the present embodiment, a pump chamber 617 to store the working fluid is formed inside the pump chamber forming portion 613 of the elastic portion 61 (see FIG. 14). In the present embodiment, the pump chamber forming portion 613 faces the pump chamber 617 in the transverse direction. The pump chamber forming portion 613 is deformable by an external force applied from the base portion 63.

The channel joint portion 615 serves as a joining section to which the capillary portion 22 is joined. The channel joint portion 615 receives an end portion on the other end side of the first capillary 24 of the capillary portion 22. In the present embodiment, the channel joint portion 615 is made integral with the capillary portion 22 as the capillary portion 22 is press-fitted into the channel joint portion 615 (see FIG. 14). The channel joint portion 615 is in close contact with the capillary portion 22, preventing the working fluid from leaking between the channel joint portion 615 and the capillary portion 22. The channel joint portion 615 forms a channel for flow of the working fluid between the pump chamber 617 and the capillary portion 22.

In the pipetting device 2 of the present embodiment, the elastic portion 61 is joined to the base portion 63 at the joint portion 611. The elastic portion 61 is also joined to the capillary portion 22 at the channel joint portion 615. Thus, the base portion 63, the elastic portion 61, and the capillary portion 22 are made integral as a whole. This allows a user to handle the base portion 63, the elastic portion 61, and the capillary portion 22 as if they were a single component, without having to recognize them as separate components.

Now, the sizes of the respective structural portions of the elastic portion 61 will be described in detail.

As shown in FIG. 16, the inner diameter h1 of the joint portion 611 is the largest in the through-hole 61H. The outer diameter L1 of the joint portion 611 is the largest in the elastic portion 61. The joint portion 611 has a thickness T1.

The inner diameter h2 of the channel joint portion 615 is the smallest in the through-hole 61H. The outer diameter L2 of the channel joint portion 615 is the smallest in the elastic portion 61. Also, the channel joint portion 615 has a thickness T2. The thickness T2 of the channel joint portion 615 is slightly smaller than the thickness T1 of the joint portion 611 (T2 < T1).

The inner diameter h3 of the pump chamber forming portion 613 is smaller than the inner diameter h1 of the joint portion 611 and larger than the inner diameter h2 of the channel joint portion 615 (h2 < h3 < h1). In the present embodiment, the inner diameter h3 of the pump chamber forming portion 613 gradually decreases from the other end side toward the one end side. The outer diameter L3 of the pump chamber forming portion 613 is smaller than the outer diameter L1 of the joint portion 611 and larger than the outer diameter L2 of the channel joint portion 615 (L2 < L3 < L1). In the present embodiment, the outer diameter L3 of the pump chamber forming portion 613 gradually decreases from the other end side toward the one end side. The pump chamber forming portion 613 has a thickness T3. The thickness T3 of the pump chamber forming portion 613 is smaller than both the thickness T1 of the joint portion 611 and the thickness T2 of the channel joint portion 615 (T3 < T2 <T1). That is, the pump chamber forming portion 613 is the thinnest portion of the elastic portion 61. Thus, in the present embodiment, the pump chamber forming portion 613 has a low rigidity and is most easily deformable.

Now, the relationship between the elastic portion 61 and the housing unit 92 will be described.

As shown in FIG. 16, the elastic portion 61 is formed smaller in the transverse direction than the inner surface of the housing unit 92 (a cover portion 96 described below). That is, the elastic portion 61 is sized slightly smaller than the housing unit 92. As a result, a gap B of a predetermined distance is present between the elastic portion 61 and the housing unit 92. The gap B is set based on the distance that ensures the elastic portion 61 does not come into contact with the housing unit 92 (a cover portion 96 described below) even when the elastic portion 61 is deformed and bulges outward in the transverse direction.

On the other hand, the elastic portion 61 is in contact with the housing unit 92 (a cover portion 96 described below) in the axial direction. Specifically, the elastic portion 61 is in contact with the housing unit 92 at the one end side and the base portion 63 at the other end side (see FIG. 14). In this manner, the elastic portion 61 is axially held between the inner end portion of the housing unit 92 and the base portion 63.

Now, the base portion 63 will be described in detail.

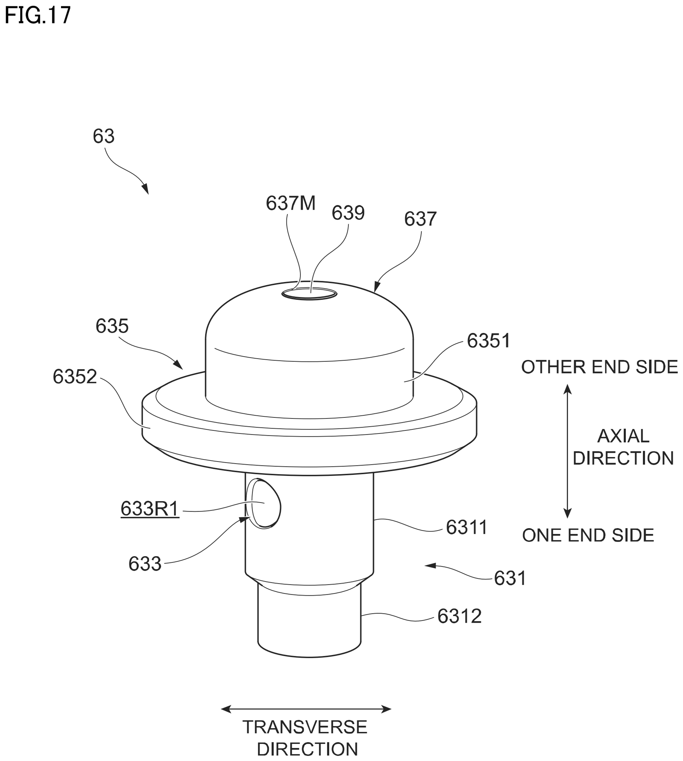

FIG.17 is a perspective view of the base portion 63 of the second embodiment.

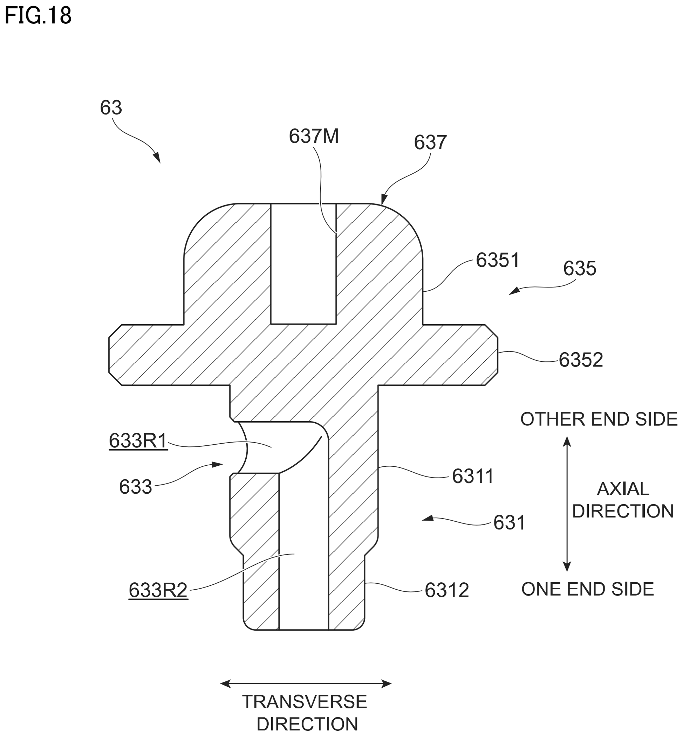

FIG.18 is a cross-sectional view of the base portion 63 of the second embodiment.

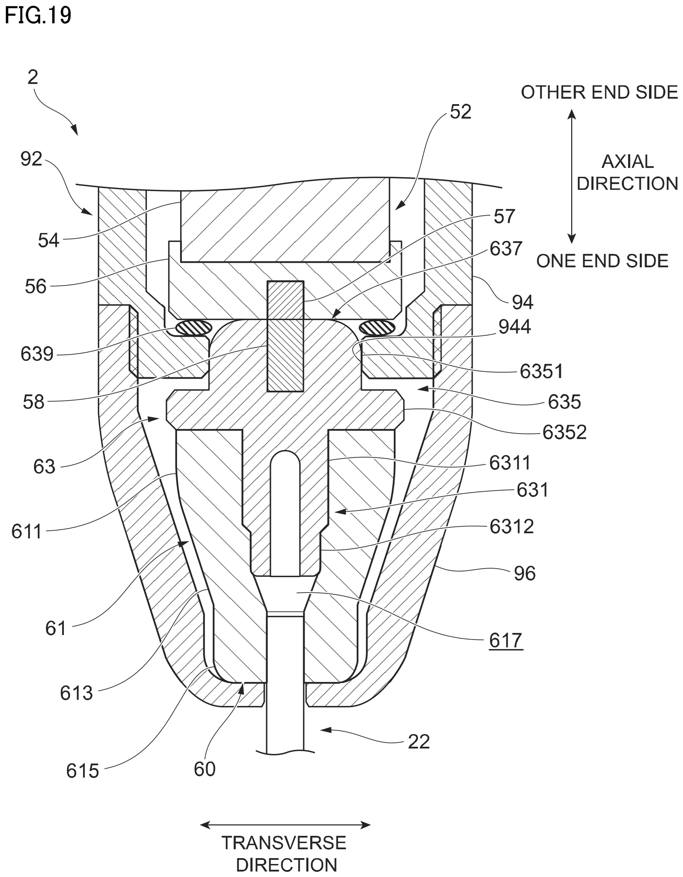

FIG.19 is an enlarged cross-sectional view of the pipetting device 2 of the second embodiment. Note that FIG. 19 shows the control unit 60 as being displaced toward the other end side by the drive unit 52.

As shown in FIG. 17, the base portion 63 includes: an insertion portion 631 configured to be inserted into the elastic portion 61; an injection portion 633 configured to inject the working fluid; a connection portion 635 configured to be connected to the housing unit 92 and to deform the elastic portion 61; a receiving portion 637 configured to receive force from the drive unit 52; and a magnet portion 639 having a magnet. In the present embodiment, the base portion 63 may be made of, for example, polyacetal resin (POM resin). The base portion 63 has a greater hardness than the elastic portion 61.

The insertion portion 631 is provided on the opposite side of the connection portion 635 from the receiving portion 637 in the axial direction. The insertion portion 631 protrudes in a rod-like shape toward the one end side. The insertion portion 631 serves as a portion to be inserted into the through-hole 61H of the elastic portion 61 (see FIG. 14). In the present embodiment, the insertion portion 631 includes a first insertion portion 6311 provided at the other end side and a second insertion portion 6312 provided at the one end side relative to the first insertion portion 6311. As shown in FIG. 18, the outer diameter of the first insertion portion 6311 is smaller than that of the connection portion 635. The outer diameter of the second insertion portion 6312 is smaller than that of the first insertion portion 6311.

As shown in FIG. 18, the injection portion 633 is provided inside the insertion portion 631. The injection portion 633 forms a channel through which the working fluid flows. The injection portion 633 includes a first channel 633R1 provided at the other end side of the insertion portion 631 and a second channel 633R2 provided at the one end side of the insertion portion 631. The first channel 633R1 extends along the transverse direction. The second channel 633R2 is bent from the first channel 633R1 and extends along the axial direction.

As shown in FIG. 17, the connection portion 635 is provided between the insertion portion 631 and the receiving portion 637 in the axial direction of the base portion 63. The connection portion 635 includes a cylindrical portion 6351 provided at the other end side, and a flange portion 6352 provided at the one end side relative to the cylindrical portion 6351 and protruding annularly in the transverse direction. The flange portion 6352 has the largest outer diameter in the base portion 63. Also, the outer diameter of the flange portion 6352 is slightly larger than the outer diameter of the joint portion 611, which is the largest in the elastic portion 61 (see FIG. 14). The connection portion 635 is positioned to face the end portion on the other end side of the elastic portion 61 and is configured to press the entire elastic portion 61.

As shown in FIG. 19, the connection portion 635 is attached to a second support portion 944 (described below) of the housing unit 92. The outer diameter of the cylindrical portion 6351 is slightly smaller than the inner diameter of the second support portion 944 of the housing unit 92. The cylindrical portion 6351 is fitted into the second support portion 944. Also, the cylindrical portion 6351 is axially movable within the second support portion 944. The base portion 63 is prevented from coming out from the second support portion 944 toward the other end side by the flange portion 6352 of the connection portion 635.

As shown in FIG. 17, the receiving portion 637 is provided at the end portion on the other end side of the base portion 63. The receiving portion 637 is formed in a substantially hemispherical shape. The outer end portion of the receiving portion 637 in the transverse direction is formed in a rounded (curved) shape. Here, the rounded shape refers to a shape in which a corner portion is rounded to form a curved profile. The receiving portion 637 comes into contact with a plate portion 56 (described below) of the drive unit 52 (see FIG. 19). In this embodiment, the end portion of the receiving portion 637 that comes into contact with the plate portion 56 has the rounded profile, thereby reducing the number of contact points with the plate portion 56.

The receiving portion 637 further includes a holding portion 637M, located at the center in the transverse direction, configured to hold the magnet portion 639. In the present embodiment, the holding portion 637M is an opening formed in a cylindrical shape. The holding portion 637M extends in the axial direction.

As shown in FIG. 17, the magnet portion 639 is a cylindrical magnet. For example, the magnet portion 639 may be a magnet having a relatively strong magnetic force, such as a neodymium magnet. The magnet portion 639 is attached inside the holding portion 637M of the receiving portion 637. In the present embodiment, the magnet portion 639 is press-fitted into and held by the holding portion 637M. Note that the magnet portion 639 is held by the holding portion 637M with enough strength to ensure it does not come off from the holding portion 637M during attachment and detachment of the control unit 60, which will be described below.

The magnet portion 639 is provided at a position corresponding to a magnet portion 57 (described below) of the drive unit 52. The magnet portion 639 and the magnet portion 57 (described below) of the drive unit 52 are magnetically attracted to each other.

### (Drive Unit 52)

As shown in FIG. 14, the drive unit 52 of the second embodiment includes a piezoelectric element 54 of a piezoelectric type configured to convert voltage into force, a plate portion 56 configured to move in the axial direction, and a sealing portion 58 provided between the housing unit 92 and the plate portion 56. The drive unit 52 moves the plate portion 56 in the axial direction, thereby causing the capillary portion 22 to aspirate and dispense the object via the control unit 30. The drive unit 52 is controlled by a controller (not shown) configured to adjust the voltage applied to the piezoelectric element 54.

The piezoelectric element 54 deforms at least in the axial direction in response to an input voltage. The plate portion 56 is provided at the one end side relative to the piezoelectric element 54. The piezoelectric element 54 moves the plate portion 56 toward the one end side or the other end side in response to an input voltage. The piezoelectric element 54 is controlled by the setting of an electrical input signal. The piezoelectric element 54 always produces a constant amount of displacement in response to a given input voltage. Accordingly, the piezoelectric element 54 allows the amount of displacement to be controlled in response to an input voltage. In this manner, the drive unit 52 allows the stroke and timing of movement of the plate portion 56 by the piezoelectric element 54 to be accurately controlled.

The plate portion 56 is a substantially disc-shaped member. The plate portion 56 includes a flat portion 561 provided at the one end side and protruding portions 562 provided on the other end side. In the present embodiment, the plate portion 56 may be made of, for example, aluminum. As will be described below, a magnet portion 57 is provided in the plate portion 56. In the pipetting device 2 of the present embodiment, aluminum, which is a nonmagnetic material, is used for the plate portion 56 so that the plate portion 56 itself is less susceptible to magnetic influence.

The flat portion 561 is a substantially circular, planar portion. The flat portion 561 faces the sealing portion 58 and the base portion 63. The flat portion 561 is in close contact with the sealing portion 58. The flat portion 561 also has, at its center in the transverse direction, a holding portion 561M configured to hold the magnet portion 57. In the present embodiment, the holding portion 561M is an opening formed in a cylindrical shape. The magnet portion 57 is attached in the holding portion 561M. The plate portion 56, together with the magnet portion 57, is capable of pressing the receiving portion 637 of the base portion 63 in the axial direction.

The protruding portions 562 are provided at the outer side in the transverse direction of the plate portion 56 and protrude toward the other end side. In the present embodiment, multiple protruding portions 562 are provided in the circumferential direction of the plate portion 56. The protruding portions 562 serve to position the piezoelectric element 54 in the transverse direction.

The magnet portion 57 is a cylindrical magnet. For example, the magnet portion 57 may be a magnet having a relatively strong magnetic force, such as a neodymium magnet. The magnet portion 57 is attached inside the holding portion 561M. In the present embodiment, the magnet portion 57 is press-fitted into and held by the holding portion 561M. Note that the holding portion 561M is held by the holding portion 561M with enough strength to ensure it does not come off from the holding portion 561M during attachment and detachment of the control unit 60, which will be described below.

In the present embodiment, the magnet portion 57 of the drive unit 52 is configured to be attracted to the magnet portion 639 of the control unit 60. That is, the magnet portion 57 of the drive unit 52 and the magnet portion 639 of the control unit 60 are set to have opposite magnetic poles so that they attract each other.

The sealing portion 58 shown in FIG. 14 is an annular member made of an elastic material such as synthetic rubber. The sealing portion 58 has a substantially circular cross-section in the absence of external force. The sealing portion 58 may be a so-called O-ring. The sealing portion 58 is in contact with the housing unit 92 at the one end side and the plate portion 56 at the other end side. In the present embodiment, the sealing portion 58 seals the gap between the housing unit 92 and the plate portion 56, thereby preventing, for example, the working fluid or the sample from entering the housing unit 92.

In the present embodiment, the sealing portion 58 is made of an elastic material and generates a restoring force upon deformation. When compressed in the axial direction, the sealing portion 58 exerts a force on the drive unit 52 to displace it toward the other end side.

### (Housing Unit 92)

As shown in FIG. 14, the housing unit 92 includes a main body portion 94 formed in a cylindrical shape. The main body portion 94 accommodates the drive unit 52. The housing unit 92 also includes a cover portion 96 formed in a tubular conical shape. The cover portion 96 accommodates the control unit 60.

The main body portion 94 is provided at the other end side relative to the cover portion 96. The main body portion 94 includes: an accommodating portion 941 configured to accommodate the drive unit 52; a first support portion 942 provided at the other end side; a second support portion 944 provided at the one end side; a joining portion 945 configured to serve as a joint for connecting separable portions of the main body portion 94; and a wiring portion 946 configured to allow passage of wiring electrically connected to the drive unit 52.

The accommodating portion 941 defines a space inside the main body portion 94 for accommodating the drive unit 52. In the axial direction, the accommodating portion 941 extends so as to correspond to the lengths of the drive unit 52 and the sealing portion 58. In the transverse direction, the accommodating portion 941 is formed slightly larger than the drive unit 52. The accommodating portion 941 is sized to ensure it does not come into contact with the drive unit 52 even when the drive unit 52 is displaced and expanded in the transverse direction.

The first support portion 942 is provided at the other end side relative to the accommodating portion 941. The first support portion 942 faces the end portion on the other end side of the piezoelectric element 54 and supports the piezoelectric element 54 from the other end side.

The second support portion 944 is provided at the one end side relative to the accommodating portion 941. The second support portion 944 protrudes from the inner surface of the accommodating portion 941 inward (i.e., toward the center) in the transverse direction. The second support portion 944 faces the end portion on the one end side of the sealing portion 58 and supports the piezoelectric element 54 from the one end side via the sealing portion 58 and the plate portion 56.

The second support portion 944 also faces the control unit 60 at the one end side and supports the control unit 60 from the other end side. Specifically, the cylindrical portion 6351 of the base portion 63 is fitted into and attached to the second support portion 944 (see FIG. 19 below). The inner diameter of the second support portion 944 corresponds to the outer diameter of the cylindrical portion 6351. That is, the inner diameter of the second support portion 944 is slightly larger than the outer diameter of the cylindrical portion 6351 and smaller than the outer diameter of the flange portion 6352.

As shown in FIG. 14, the joining portion 945 is provided at the one end side of the main body portion 94. In the present embodiment, the main body portion 94 is configured to be separable in the axial direction at the joining portion 945. Separating the main body portion 94 allows the drive unit 52 to be placed into the accommodating portion 941. The joining portion 945 may be embodied by a screw connection.

The wiring portion 946 is provided at the end portion on the other end side of the main body portion 94. Wiring (not shown) for supplying power to the piezoelectric element 54 is provided in the wiring portion 946.

The cover portion 96 is provided at the one end side relative to the main body portion 94 and is detachably attached to the main body portion 94. In the present embodiment, the cover portion 96 includes an accommodating portion 961 configured to accommodate the control unit 60, a connection portion 963 provided at the other end side, and a support portion 965 provided at the one end side.

The accommodating portion 961 defines a space inside the main body portion 94 for accommodating the control unit 60. The accommodating portion 961 extends so as to correspond to the axial length of the control unit 60. In the transverse direction, the accommodating portion 961 is formed slightly larger than the control unit 60.

The connection portion 963 serves as a connection to the main body portion 94. In the present embodiment, the connection portion 963 may be embodied by a screw structure. By being connected to the main body portion 94, the cover portion 96 accommodates the control unit 60 and integrally connects the control unit 60 and the drive unit 52.

The support portion 965 protrudes toward the center in the transverse direction. The support portion 965 faces, at the other end side, the end portion on the one end side of the control unit 60. The support portion 965 supports the elastic portion 61 of the control unit 60 from the one end side.

The support portion 965 further includes a through-hole 965H configured to allow the capillary portion 22 to pass therethrough in the axial direction, and a cutout portion 965S configured to allow for passage of the capillary portion 22 (see FIG. 13). The inner diameter of the through-hole 965H is larger than the outer diameter of the capillary portion 22 and smaller than the outer diameter of the channel joint portion 615 of the base portion 63. The cutout portion 965S (see FIG. 13) is formed in the side surface of the cover portion 96 so as to extend along the axial direction. The cutout portion 965S extends through the cover portion 96 in the transverse direction.

The cover portion 96 allows the capillary portion 22 to pass in the axial direction through the through-hole 965H. The cover portion 96 also allows the capillary portion 22 to pass in the transverse direction through the cutout portion 965S.

### (Holding of the Control Unit 60)

The positioning of the control unit 60 will now be described in detail.

As shown in FIG. 19, in attaching the control unit 60 to the housing unit 92, the connection portion 635 is fitted into the second support portion 944 of the main body portion 94. The control unit 60 is thereby positioned in the transverse direction by the main body portion 94, and is also positioned in the axial direction as the magnet portion 57 of the drive unit 52 and the magnet portion 639 attract each other. Note that while the magnetic force acts between the magnet portion 57 and the magnet portion 639 in the axial direction, their movement in the transverse direction is permitted. After the control unit 60 is attached to the second support portion 944 of the main body portion 94, the cover portion 96 is attached to the main body portion 94. In this embodiment, the cover portion 96 is formed larger than the inner diameter of the accommodating portion 961. Therefore, the cover portion 96 does not determine the position of the control unit 60 in the transverse direction. Furthermore, the control unit 60 comes into contact with the plate portion 56 via the hemispherical receiving portion 637. This hemispherical shape helps reduce the influence of any tilting or misalignment on the control unit 60 that may otherwise occur during contact with the plate portion 56.

As described above, in the pipetting device 2 of the present embodiment, the positioning of the control unit 60 in the transverse direction is performed by the second support portion 944, so that its position in the transverse direction is not affected by the other structural portions. Thus, the pipetting device 2 of the present embodiment allows the control unit 60 to be accurately positioned in the transverse direction.

On the other hand, in the pipetting device 2 of the present embodiment, the control unit 60 is held in the axial direction between the second support portion 944 of the main body portion 94 and the support portion 965 of the cover portion 96. The control unit 60 is thereby positioned in the axial direction.

FIG.20 illustrates the control unit 60 of the second embodiment.

The pipetting device 2 of the second embodiment employs at least two types of control units 60.

As shown in FIGS. 20(A) and 20(B), the first control unit 601 and the second control unit 602 differ in the diameter (radius) of the second insertion portion 6312 of the insertion portion 631. That is, the first control unit 601 and the second control unit 602 differ in the area of the surface (the second insertion portion 6312) facing the axial direction in which the base portion 63 moves. In the present embodiment, due to the difference in the diameter of the pump chamber forming portion 613, which is determined by the outer diameter of the second insertion portion 6312, the first control unit 601 and the second control unit 602 also differ in their maximum working fluid capacity of the pump chamber 617. Accordingly, the first control unit 601 and the second control unit 602 differ in the volume of the working fluid inside the pump chamber 617 pushed or drawn by the insertion portion 631 in response to the axial movement of the base portion 63. Thus, for example, at the same axial stroke of the plate portion 56 and the base portion 63, the flow rate of the working fluid aspirated or dispensed by the pump chamber 617 differs between the first control unit 601 and the second control unit 602.

Specifically, the base portion 63 of the first control unit 601 shown in FIG. 20(A) has the second insertion portion 6312 with a diameter R1 set to approximately 2.5 mm. Meanwhile, the base portion 63 of the second control unit 602 shown in FIG. 20(B) has the second insertion portion 6312 with a diameter R2 set to approximately 2.0 mm. Accordingly, the cross-sectional area of the second insertion portion 6312 of the base portion 63 in the first control unit 601 is larger than that of the second insertion portion 6312 of the base portion 63 in the second control unit 602. As a result, the working fluid capacity of the pump chamber 617 in the first control unit 601 is greater than that of the pump chamber 617 in the second control unit 602. In the present embodiment, the first control unit 601 is configured such that the amount of working fluid in the pump chamber 617 operated by the second insertion portion 6312 is greater than that in the second control unit 602.

As described above, in the present embodiment, the first and second control units 601 and 602 differ in the shape of the insertion portion 631 of the base portion 63. Except for the insertion portion 631, the base portion 63 of the first and second control units 601 and 602 is structurally identical (common). That is, the first and second control units 601 and 602 have the same shapes for the connection portion 635 and the receiving portion 637. The elastic portion 61 of the first and second control units 601 and 602 is also structurally identical (common).

### (Function of the Pipetting Device 2)

The function of the pipetting device 2 of the second embodiment will now be described.

The pump chamber 617 in the pump chamber forming portion 613 shown in FIG. 19 is filled with the working fluid. The capillary portion 22 connected to the pump chamber 617 is also filled with the working fluid. The injection portion 633 (see FIG. 17) described above is used to fill the working fluid into the pump chamber 617 and the capillary portion 22.

For example, the basic state is a state in which the plate portion 56 has advanced by a predetermined amount toward the one end side in the axial direction. In this basic state, the elastic portion 61 is deformed as it is pressed by the base portion 63 via the plate portion 56. Specifically, in the present embodiment, the pump chamber forming portion 613 of the elastic portion 61 is compressed as it is pressed in the axial direction. As a result, the volume of the pump chamber 617 formed inside the pump chamber forming portion 613 is reduced compared to when the elastic portion 61 is undeformed.

In the present embodiment, the voltage applied to the piezoelectric element 54 of the drive unit 52 is reduced. This causes the piezoelectric element 54 to retract relative to the plate portion 56. The drive unit 52 and the control unit 60 are magnetically attracted to each other. The sealing portion 58 and the elastic portion 61 are both made of an elastic material. The sealing portion 58 exerts, by its restoring force, a force toward the other end side on the plate portion 56. Also, the elastic portion 61 exerts, by its restoring force, a force toward the other end side on the base portion 63. As a result, the plate portion 56, the base portion 63, and the elastic portion 61 are all displaced toward the other end side. This causes the insertion portion 631 of the base portion 63 to move in a direction away from the pump chamber 617. Consequently, the volume of the pump chamber 617 increases compared to the basic state, resulting in the working fluid in the capillary portion 22 being drawn into the pump chamber 617. In this manner, the pipetting device 2 allows the object to be aspirated through the capillary portion 22.

On the other hand, the plate portion 56 is moved from its position in the basic state toward the one end side. In the present embodiment, the voltage applied to the piezoelectric element 54 of the drive unit 52 is increased. This causes the plate portion 56 to further press the base portion 63 toward the one end side from its position in the basic state, resulting in the base portion 63 being further displaced toward the one end side. The insertion portion 631 of the base portion 63 advances into the pump chamber 617. The working fluid in the pump chamber 617 is pushed toward the one end side by the second insertion portion 6312 of the insertion portion 631. The pump chamber forming portion 613 is significantly compressed in the axial direction, and the volume of the pump chamber 617 is reduced compared to the basic state. This causes the working fluid to flow out from the pump chamber 617. In this manner, the pipetting device 2 allows the object contained in the capillary portion 22 to be dispensed.

The pipetting device 2 of the present embodiment allows the control unit 60 to be replaced. Furthermore, the operation volume of the object by the capillary portion 22 in response to an input voltage applied to the piezoelectric element 54 of the drive unit 52 can be varied depending on the type of the control unit 60. As the pipetting device 2 of the second embodiment allows the control unit 60 to be replaced, it can vary the sensitivity, i.e., the change in operation volume in response to, for example, a certain change in input voltage.

For example, the pipetting device 2 of the second embodiment allows constant control of the input voltage applied to the piezoelectric element 54, regardless of the type of the control unit 60. The pipetting device 2 can vary the operation volume depending on the type of the control unit 60, even when the same input voltage is applied. To adjust the sensitivity, the pipetting device 2 does not need to control, for example, the amount of displacement to the piezoelectric element 54 caused by the input voltage applied thereto. Thus, the pipetting device 2 of the present embodiment ensures stable control of the drive unit 52.

The setup of the pipetting device 2 of the second embodiment will now be described.

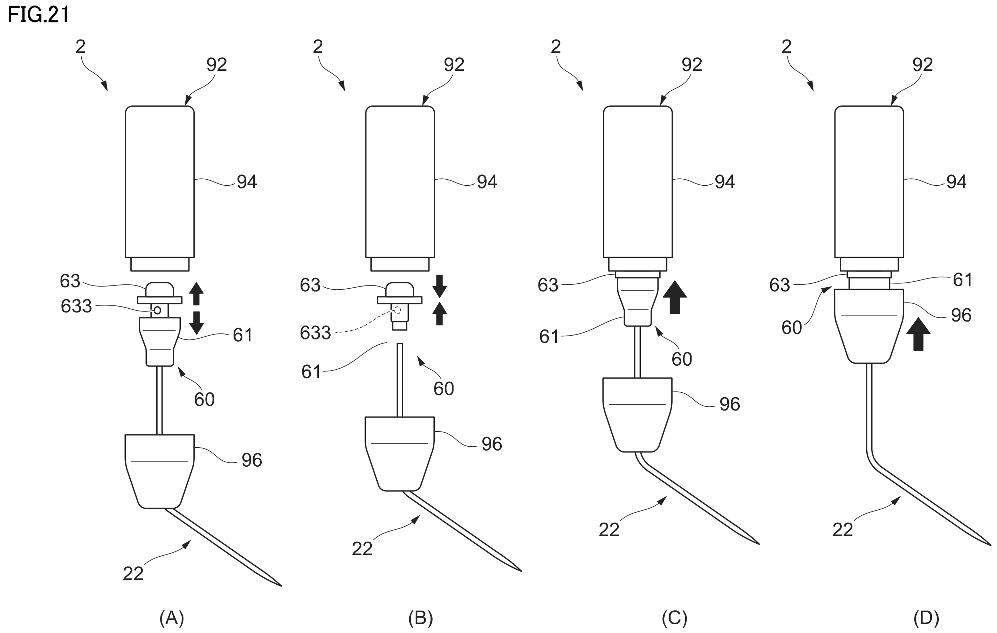

FIG.21 illustrates preparation of the pipetting device 2 of the second embodiment.

As shown in FIG. 21(A), first, the base portion 63 is partially pulled out from the elastic portion 61. Note that the elastic portion 61 remains connected to the capillary portion 22. Then, working fluid is injected using the injection portion 633 of the base portion 63. The injected working fluid fills the first channel 633R1, the second channel 633R2 (see FIG. 18), the pump chamber 617, and the capillary portion 22.

Then, as shown in FIG. 21(B), the base portion 63 is joined to the elastic portion 61. Specifically, the insertion portion 631 of the base portion 63 is inserted into the joint portion 611 of the elastic portion 61 (see FIG. 19). At this point, the injection portion 633 of the base portion 63 is closed by the elastic portion 61.

As shown in FIG. 21(C), the control unit 60 is attached to the main body portion 94. Specifically, the cylindrical portion 6351 of the base portion 63 is fitted into the second support portion 944 of the main body portion 94 (see FIG. 19). At this point, the base portion 63, the elastic portion 61, and the capillary portion 22 are integrated together. This facilitates the setup operation as the user performing the setup operation can handle the integrated base portion 63, elastic portion 61, and capillary portion 22. Furthermore, as described above, attaching the base portion 63 to the main body portion 94 automatically positions the control unit 60 in the transverse direction, without requiring the user to make any intentional positional adjustments.

As described above with reference to FIG. 19, in the present embodiment, the first and second control units 601 and 602 have the same shape for the connection portion 635 (the cylindrical portion 6351 and the flange portion 6352) of the base portion 63. Accordingly, the control unit 60, which may either be the first control unit 601 or the second control unit 602, can be attached to the same housing unit 92 (the second support portion 944).

Finally, as shown in FIG. 21(D), the cover portion 96 is connected to the main body portion 94. In the present embodiment, the cover portion 96 includes the cutout portion 965S. This allows the cover portion 96 to be attached even to the capillary portion 22 having a bent portion.

As the cover portion 96 is connected to the main body portion 94, the control unit 60 is positioned in the axial direction.

As described above with reference to FIG. 19, in the present embodiment, the first and second control units 601 and 602 differ in the shape of the insertion portion 631 (the second insertion portion 6312) of the base portion 63. As described above, attaching either the first control unit 601 or the second control unit 602 as the control unit 60 allows the amount of working fluid aspirated or dispensed by the pipetting device 2 to be easily changed.

### (Modification)

In the pipetting device 2 of the second embodiment, the operation volume of the working fluid (the amount of working fluid aspirated or dispensed) in response to a predetermined amount of movement of the plate portion 56 is varied by employing respective base portions 63 having different structures in the first and second control units 601 and 602. However, the present disclosure is not limited to this embodiment.

In one modification, the pipetting device 2 may be configured to vary the operation volume of the working fluid between the first and second control units 601 and 602 by altering the structure of the elastic portion 61. Specifically, in the pipetting device 2 of this modification, the shape of the pump chamber forming portion 613 in the elastic portion 61 is varied between the first and second control units 601 and 602. For example, the thickness T3 of the pump chamber forming portion 613 of the first control unit 601 is made smaller than that of the pump chamber forming portion 613 of the second control unit 602. This allows the first control unit 601 to have a greater operation volume of the working fluid than the second control unit 602 in response to a predetermined amount of movement of the plate portion 56.

In another modification, the pipetting device 2 may be configured to vary the operation volume of the working fluid between the first and second control units 601 and 602 by altering the rigidity of the elastic portion 61. Specifically, in the pipetting device 2 of this modification, the rigidity of the elastic portion 61 is varied between the first and second control units 601 and 602. For example, the rigidity of the elastic portion 61 of the first control unit 601 is made lower than that of the elastic portion 61 of the second control unit 602. This allows the first control unit 601 to have a greater operation volume of the working fluid than the second control unit 602 in response to a predetermined amount of movement of the plate portion 56. In this case, the rigidity of the elastic portion 61 of the first and second control units 601 and 602 can be varied by using different resin materials or by changing their material composition.

The above modifications are merely exemplary. For example, to increase the operation volume of the working fluid in response to a predetermined amount of movement of the plate portion 56, the thickness T3 of the pump chamber forming portion 613 in one of the first and second control units 601 and 602 may be made greater than that in the other. Similarly, for example, to increase the operation volume of the working fluid in response to a predetermined amount of movement of the plate portion 56, the rigidity of the elastic portion 61 in one of the first and second control units 601 and 602 may be made higher than that in the other.

Furthermore, the configuration in which the elastic portion 61 is varied, as in the above modification, may be combined with the configuration in which the base portion 63 is varied, as in the second embodiment. That is, the first and second control units 601 and 602 may differ in both the elastic portion 61 and the base portion 63.

Here, the pipetting device 2 of the second embodiment is an example of the pipetting device. The capillary portion 22 is an example of the tube portion. The drive unit 52 is an example of the drive unit. The plate portion 56 is an example of the movable portion. The housing unit 92 and the second support portion 944 are examples of the mounting unit. The first control unit 601 is an example of the first pump unit (pump unit). The second control unit 602 is an example of the second pump unit (pump unit). The pump chamber 617 is an example of the pump chamber. The insertion portion 631 and the second insertion portion 6312 are examples of the operation portion. The connection portion 635 is an example of the connection portion. The joint portion 611 is an example of the first joint portion. The channel joint portion 615 is an example of the second joint portion.

While various modifications have been described above, these modifications may be combined. Also, the present disclosure is in no way limited to the embodiments described above, and various changes and modifications may be made without departing from the spirit and scope of the present disclosure.

### Reference Signs List

1, 2: Pipetting device
10: Capillary unit
30: Control unit
31: Mounting unit
40: Microfluidic chip
41: Supply connection channel
47: Pump chamber
48: Tube connection channel
49: Diaphragm portion
50: Drive unit
51: Piezoelectric element
53: Rod
60: Control unit
61: Elastic portion
63: Base portion
70: Supply unit
311: First mounting portion
312: Second mounting portion
313: Securing member
401: First microfluidic chip
402: Second microfluidic chip
601: First control unit
602: Second control unit

## Claims

1. A pipetting device comprising:
a tubular tube portion configured to aspirate and dispense an object via working fluid;
a drive unit configured to drive a movable portion configured to be movable; and
a mounting unit configured to detachably receive a pump unit, the pump unit being configured to store the working fluid and to aspirate the working fluid from the tube portion and dispense the working fluid into the tube portion in response to movement of the movable portion, wherein
an amount of the working fluid aspirated or dispensed in response to a predetermined amount of movement of the movable portion varies depending on whether a first pump unit or a second pump unit is attached as the pump unit to the mounting unit.

2. The pipetting device according to claim 1, wherein the first pump unit and the second pump unit each comprise:
a pump chamber configured to store the working fluid; and
a deformable portion disposed to face the pump chamber and configured to deform in response to movement of the movable portion.

3. The pipetting device according to claim 2, wherein the movable portion of the drive unit is configured to deform the deformable portion of the first pump unit or the second pump unit attached to the mounting unit, without coming into contact with the working fluid.

4. The pipetting device according to claim 2, further comprising a supply unit configured to supply working fluid from outside to the pump chamber of the first pump unit or the second pump unit attached to the mounting unit.

5. A pipetting system comprising:
a tubular tube portion configured to aspirate and dispense an object via working fluid;
a drive unit configured to drive a movable portion configured to be movable;
a first pump unit configured to aspirate the working fluid from the tube portion and dispense the working fluid into the tube portion in response to movement of the movable portion, the first pump unit including a first deformable portion disposed to face a first pump chamber at one side thereof and to contact the movable portion at the other side thereof, the first pump chamber being configured to store the working fluid; and
a second pump unit configured to aspirate the working fluid from the tube portion and dispense the working fluid into the tube portion in response to movement of the movable portion, the second pump unit including a second deformable portion disposed to face a second pump chamber at one side thereof and to contact the movable portion at the other side thereof, the second deformable portion having a structure different from a structure of the first deformable portion, the second pump chamber being configured to store the working fluid.

6. The pipetting system according to claim 5, wherein the first deformable portion and the second deformable portion are each formed in a plate shape.

7. The pipetting system according to claim 6, wherein the first deformable portion and the second deformable portion differ in length in a direction transverse to a direction of movement of the movable portion.

8. The pipetting system according to claim 6, wherein the first deformable portion and the second deformable portion differ in thickness in a direction of movement of the movable portion.

9. The pipetting system according to claim 5, wherein
the first pump unit has a plate-shaped structure in which the first deformable portion, the first pump chamber, and a first channel portion configured to allow for flow of the working fluid between the first pump chamber and the tube portion are integrally formed, and
the second pump unit has a plate-shaped structure in which the second deformable portion, the second pump chamber, and a second channel portion configured to allow for flow of the working fluid between the second pump chamber and the tube portion are integrally formed.

10. A pump component configured to be detachably attached to a pipetting device having a tubular tube portion for aspirating and dispensing an object via working fluid, and to vary aspiration and dispensing characteristics of the tube portion, the pump component comprising:
a pump chamber configured to store the working fluid;
a deformable portion disposed to face the pump chamber and configured to deform under an external force; and
a channel portion configured to form a channel for the working fluid between the pump chamber and the tube portion.

11. A pipetting device comprising:
a tubular tube portion configured to aspirate and dispense an object via working fluid;
a drive unit configured to drive a movable portion configured to be movable; and
a mounting unit configured to detachably receive a pump unit, the pump unit being configured to aspirate the working fluid from the tube portion and dispense the working fluid into the tube portion in response to movement of the movable portion, wherein
an amount of the working fluid aspirated or dispensed in response to a predetermined amount of movement of the movable portion varies depending on whether a first pump unit or a second pump unit is attached as the pump unit to the mounting unit,
the first pump unit and the second pump unit each include a pump chamber configured to store working fluid, an operation portion configured to operate the working fluid in the pump chamber in response to movement of the movable portion, and a connection portion configured to connect to the mounting unit,
the operation portion of the first pump unit and the operation portion of the second pump unit differ in shape from each other, and
the connection portion of the first pump unit and the connection portion of the second pump unit each have a shape that allows the connection portion to be attached to the same mounting unit.

12. The pipetting device according to claim 11, wherein
the pump unit comprises an elastic portion configured to form the pump chamber and to be elastically deformable, and
the elastic portion comprises a first joint portion configured to be joined to the operation portion and a second joint portion configured to be joined to the tube portion.

13. The pipetting device according to claim 11, wherein the pump unit is configured to be magnetically attached to the mounting unit.

14. The pipetting device according to claim 11, wherein an end portion of the pump unit that contacts the movable portion has a rounded end.
